# EUROPEAN PATENT APPLICATION

(11) **EP 4 633 240 A1**
(43) Date of publication of application: **15.10.2025**
(21) Application number: 23910350.0
(22) Date of filing: 22.12.2023
(51) Int. Cl.: H04W 40/02

(54) **DATA TRANSMISSION METHOD, COMMUNICATION APPARATUS, AND COMMUNICATION SYSTEM**

(30) Priority: 30.12.2022 CN 202211728501
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Grünecker Patent- und Rechtsanwälte PartG mbB
(86) International application number: PCT/CN2023/140794
(87) International publication number: WO 2024/140424

(57) **Abstract**

This application relates to a data transmission method, an apparatus, and a system. The data transmission method includes: receiving, from a network device, configuration information for one packet data convergence protocol PDCP entity, where the configuration information indicates a plurality of primary paths of a plurality of types of data, and one type of data corresponds to one primary path; and transmitting, based on the configuration information, at least a first data packet on a first primary path, where the first primary path is a primary path that is in the plurality of primary paths and that corresponds to a first type of the first data packet. According to the method, the plurality of primary paths are configured for the plurality of types of data, so that different types of data packets are transmitted on respective primary paths, to implement layered QoS. This can improve transmission reliability of data with high importance in the different types of data packets, and reduce radio resource consumption of data with low importance in the different types of data packets, thereby improving a system capacity.

## Description

### TECHNICAL FIELD

This application relates to the field of communication technologies, and in particular, to a data transmission method, an apparatus, and a system.

### BACKGROUND

Extended reality (extended reality, XR) refers to various environments and humanmachine interaction that combine a real world and a virtual world and that are generated by computing technologies and wearable devices, and specifically includes the following several forms: augmented reality (augmented reality, AR), mixed reality (mixed reality, MR), and virtual reality (virtual reality, VR). XR is one of 5th generation (5th generation, 5G) multimedia applications currently prioritized in the industrial field. A data flow of an XR service may include data packets with different degrees of importance. A video is used as an example. Video frames of an XR service are periodically sent, and each video frame may be divided into one or more data packets for transmission. The video frame may be encoded based on a group of pictures (group of pictures, GOP). A GOP includes several consecutive video frames. A 1st frame is referred to as an I-frame (intra-coded picture), and other frames are referred to as P-frames (predictive-coded pictures). The I-frame uses intra-frame coding, includes complete image information, and can be independently encoded and decoded without depending on another frame. The P-frame uses predictive coding, includes partial image information, and can be encoded and decoded only with reference to a previous frame. In another coding model, a video frame may alternatively be divided into a plurality of video slices (slices). Some slices use intra-frame coding, and are referred to as I-slices; and some slices use predictive coding, and are referred to as P-slices. It can be learned that the I-frame/I-slice is a key to encoding and decoding. Therefore, protection of the I-frame/I-slice needs to be prioritized in a wireless transmission process, to ensure that the video can be correctly decoded on a receive side. Such a requirement for differentiated processing on data in a same service flow is referred to as layered (layered) quality of service (quality of service, QoS). However, how to implement layered QoS is a problem that needs to be urgently resolved currently.

### SUMMARY

This application provides a data transmission method, a communication apparatus, and a communication system, to implement layered QoS, thereby improving a system capacity.

According to a first aspect, this application provides a data transmission method. The method may be implemented by a terminal device or a component (for example, a chip or a circuit) that can be used in the terminal device. The method may include: receiving, from a network device, configuration information for one packet data convergence protocol PDCP entity, where the configuration information indicates a plurality of primary paths of a plurality of types of data, and one type of data corresponds to one primary path; and transmitting, based on the configuration information, at least a first data packet on a first primary path, where the first primary path is a primary path that is in the plurality of primary paths and that corresponds to a first type of the first data packet.

In the method, the plurality of primary paths are configured for the plurality of types of data, so that different types of data packets are transmitted on respective primary paths, to implement layered QoS. This can improve transmission reliability of data with high importance in the different types of data packets, and reduce radio resource consumption of data with low importance in the different types of data packets, thereby improving a system capacity.

In a possible design of the first aspect, a data volume of the first primary path is sent to a media access control MAC entity corresponding to the first primary path. In this design, data volumes of different types of data are reported to MAC entities corresponding to primary paths of the corresponding types of data, so that the MAC entities dynamically manage the corresponding types of data subsequently.

In a possible design of the first aspect, the method further includes: receiving a first activation indication from the network device, where the first activation indication indicates to activate or deactivate at least one of the plurality of primary paths. This design implements dynamic activation and deactivation of a primary path of a specific type of data, and therefore improves flexibility of a system.

In a possible design of the first aspect, a type of the data packet is determined based on information in the data packet; or a type of the data packet is determined according to an indication of a core network or an application layer.

According to a second aspect, this application provides a data transmission method. The method may be implemented by a network device or a component (for example, a chip or a circuit) that can be used in the network device. The method may include: determining configuration information for one packet data convergence protocol PDCP entity, where the configuration information indicates a plurality of primary paths of a plurality of types of data, and one type of data corresponds to one primary path; and sending the configuration information to a terminal device.

In the method, the plurality of primary paths are configured for the plurality of types of data, so that different types of data packets are transmitted on respective primary paths, to implement layered QoS. This can improve transmission reliability of data with high importance in the different types of data packets, and reduce radio resource consumption of data with low importance in the different types of data packets, thereby improving a system capacity.

In a possible design of the second aspect, the method further includes: sending a first activation indication to the terminal device, where the first activation indication indicates to activate or deactivate at least one of the plurality of primary paths.

In a possible design of the second aspect, the method further includes: sending a second activation indication to the terminal device, where the second activation indication indicates to activate a duplication secondary path of data of a first type, or indicates to deactivate the duplication secondary path of the data of the first type.

In a possible design of the first aspect or the second aspect, the configuration information includes indication information of a primary path of at least one type of data in the plurality of types of data.

In a possible design of the first aspect or the second aspect, when the configuration information includes indication information of a primary path of the data of the first type (that is, a type of the first data packet in the method according to the first aspect) in the plurality of types of data, the configuration information further includes indication information indicating to configure a primary path for data of a second type in the plurality of types of data.

In a possible design of the first aspect or the second aspect, the configuration information further indicates a PDCP duplication state and the duplication secondary path of at least the data of the first type in the plurality of types of data, and the duplication secondary path is used to transmit a duplicated data packet.

In this design, the method according to the first aspect further includes: activating or deactivating PDCP duplication and a duplication secondary path of the data of the first type based on the configuration information. In this design, a PDCP duplication state and a duplication secondary path of at least one type of data are configured for the plurality of types of data, so that PDCP duplication states are configured or not configured for different types of data, or a PDCP duplication state and a duplication secondary path of each type of data are activated or deactivated, to implement layered QoS. This can improve transmission reliability of data with high importance in the different types of data, and reduce radio resource consumption of data with low importance in the different types of data, thereby improving the system capacity.

In this design, the method according to the first aspect further includes: reporting a data volume of a first duplication secondary path of the data of the first type to a MAC entity corresponding to the first duplication secondary path of the data of the type. In this design, data volumes of different types of data are reported to MAC entities corresponding to duplication secondary paths of the corresponding types of data, so that the MAC entities dynamically manage the corresponding types of data subsequently.

In this design, the method according to the first aspect further includes: receiving a second activation indication from the network device, where the second activation indication indicates to activate the duplication secondary path of the data of the first type, or indicates to deactivate the duplication secondary path of the data of the first type. This design implements dynamic activation and deactivation of a duplication secondary path of a specific type of data, and therefore improves the flexibility of the system.

In a possible design of the first aspect or the second aspect, the configuration information includes PDCP duplication state information of at least the data of the first type in the plurality of types of data, and the PDCP duplication state information indicates whether to activate PDCP duplication.

In a possible design of the first aspect or the second aspect, the configuration information includes duplication secondary path activation state information of at least the data of the first type in the plurality of types of data, and the duplication secondary path activation state information indicates whether to activate or deactivate the duplication secondary path of the data of the first type.

In a possible design of the first aspect or the second aspect, the configuration information includes indication information of the duplication secondary path of at least the data of the first type in the plurality of types of data and indication information indicating whether to activate a specific duplication secondary path.

In a possible design of the first aspect or the second aspect, the PDCP entity is associated with one split radio access bearer split DRB, the configuration information further indicates a split secondary path of at least the data of the first type, and the split secondary path is used to transmit a split data packet.

In this design, the method according to the first aspect further includes: determining, based on the configuration information, whether to split a data packet of the first type. In this design, a split secondary path of at least one type of data is configured for the plurality of types of data, so that respective data packets of different types of data are split or not split, to implement layered QoS. This can improve transmission reliability of data with high importance in the different types of data, and reduce radio resource consumption of data with low importance in the different types of data, thereby improving the system capacity.

In this design, the method according to the first aspect further includes: reporting a data volume of a first split secondary path of the data of the first type to a MAC entity corresponding to the first split secondary path. In this design, data volumes of different types of data are reported to MAC entities corresponding to split secondary paths of the corresponding types of data, so that the MAC entities dynamically manage the corresponding types of data subsequently.

In a possible design of the first aspect or the second aspect, the configuration information includes indication information of the split secondary path of at least the data of the first type in the plurality of types of data.

In a possible design of the first aspect or the second aspect, the configuration information includes a split threshold of at least one type of data in the plurality of types of data, and one type of data corresponds to one split threshold; or the configuration information includes a general split threshold of the plurality of types of data, and the plurality of types of data correspond to one general split threshold, where the split threshold is used to determine whether to split corresponding data.

In a possible design of the first aspect or the second aspect, the plurality of types of data include data of an I-frame using intra-frame coding and data of a P-frame using predictive coding.

According to a third aspect, this application provides a data transmission method. The method may be implemented by a terminal device or a component (for example, a chip or a circuit) that can be used in the terminal device. The method may include: receiving, from a network device, configuration information for one packet data convergence protocol PDCP entity, where the configuration information indicates a PDCP duplication state and a duplication secondary path of at least data of a first type in a plurality of types of data, and the duplication secondary path is used to transmit a duplicated data packet; and activating or deactivating PDCP duplication and a duplication secondary path of the data of the first type in the data of the first type based on the configuration information.

According to a fourth aspect, this application provides a data transmission method. The method may be implemented by a network device or a component (for example, a chip or a circuit) that can be used in the network device. The method may include: determining configuration information for one packet data convergence protocol PDCP entity, where the configuration information indicates a PDCP duplication state and a duplication secondary path of at least data of a first type in a plurality of types of data, and the duplication secondary path is used to transmit a duplicated data packet; and sending the configuration information to a terminal device.

In the methods according to the third aspect and the fourth aspect, a PDCP duplication state and a duplication secondary path of at least one type of data are configured for the plurality of types of data, so that PDCP duplication states are configured or not configured for different types of data, or a PDCP duplication state and a duplication secondary path of each type of data are activated or deactivated, to implement layered QoS. This can improve transmission reliability of data with high importance in the different types of data, and reduce radio resource consumption of data with low importance in the different types of data, thereby improving a system capacity.

In a possible design, the method according to the third aspect further includes: reporting a data volume of a first duplication secondary path of the data of the first type to a MAC entity corresponding to the first duplication secondary path of the data of the type. In this design, data volumes of different types of data are reported to MAC entities corresponding to duplication secondary paths of the corresponding types of data, so that the MAC entities dynamically manage the corresponding types of data subsequently.

In a possible design, the method according to the third aspect further includes: reporting a data volume of a first duplication secondary path of the data of the first type to a MAC entity corresponding to the first duplication secondary path of the data of the type. In this design, data volumes of different types of data are reported to MAC entities corresponding to duplication secondary paths of the corresponding types of data, so that the MAC entities dynamically manage the corresponding types of data subsequently.

In a possible design of the third aspect or the fourth aspect, the configuration information includes PDCP duplication state information of at least the data of the first type in the plurality of types of data, and the PDCP duplication state information indicates whether to activate PDCP duplication.

In a possible design of the third aspect or the fourth aspect, the configuration information includes duplication secondary path activation state information of at least the data of the first type in the plurality of types of data, and the duplication secondary path activation state information indicates whether to activate or deactivate the duplication secondary path of the data of the first type.

In a possible design of the third aspect or the fourth aspect, the configuration information includes indication information of the duplication secondary path of at least the data of the first type in the plurality of types of data and indication information indicating whether to activate a specific duplication secondary path.

In a possible design of the third aspect, a type of the data packet is determined based on information in the data packet; or a type of the data packet is determined according to an indication of a core network or an application layer.

In a possible design of the third aspect or the fourth aspect, the plurality of types of data include data of an I-frame using intra-frame coding and data of a P-frame using predictive coding.

According to a fifth aspect, this application provides a data transmission method. The method may be implemented by a terminal device or a component (for example, a chip or a circuit) that can be used in the terminal device. The method may include: receiving, from a network device, configuration information for one protocol data convergence protocol PDCP entity, where the PDCP entity is associated with one split radio access bearer split DRB, the configuration information further indicates a split secondary path of at least data of a first type in a plurality of types of data, and the split secondary path is used to transmit a split data packet; and determining, based on the configuration information, whether to split a data packet of the first type.

According to a sixth aspect, this application provides a data transmission method. The method may be implemented by a network device or a component (for example, a chip or a circuit) that can be used in the network device. The method may include: determining configuration information for one protocol data convergence protocol PDCP entity, where the PDCP entity is associated with one split radio access bearer split DRB, the configuration information indicates a split secondary path of at least data of a first type in a plurality of types of data, and the split secondary path is used to transmit a split data packet; and sending the configuration information to a terminal device.

In the methods according to the fifth aspect and the sixth aspect, a split secondary path of at least one type of data is configured for the plurality of types of data, so that respective data packets of different types of data are split or not split, to implement layered QoS. This can improve transmission reliability of data with high importance in the different types of data, and reduce radio resource consumption of data with low importance in the different types of data, thereby improving a system capacity.

In a possible design, the method according to the fifth aspect further includes: reporting a data volume of a first split secondary path of the data of the first type to a MAC entity corresponding to the first split secondary path. In this design, data volumes of different types of data are reported to MAC entities corresponding to split secondary paths of the corresponding types of data, so that the MAC entities dynamically manage the corresponding types of data subsequently.

In a possible design of the fifth aspect or the sixth aspect, the configuration information includes indication information of the split secondary path of at least the data of the first type in the plurality of types of data.

In a possible design of the fifth aspect or the sixth aspect, the configuration information includes a split threshold of at least one type of data in the plurality of types of data, and one type of data corresponds to one split threshold; or the configuration information includes a general split threshold of the plurality of types of data, and the plurality of types of data correspond to one general split threshold, where the split threshold is used to determine whether to split corresponding data.

In a possible design of the fifth aspect or the sixth aspect, the plurality of types of data include data of an I-frame using intra-frame coding and data of a P-frame using predictive coding.

It should be noted that, the method shown in the third aspect or the fourth aspect may be combined with the method shown in the fifth aspect or the sixth aspect. In other words, for one PDCP entity, the PDCP duplication state and the duplication secondary path of at least the data of the first type in the plurality of types of data may be configured, and the split secondary path of at least the data of the first type in the plurality of types of data may be configured (optionally, the split threshold may be further configured).

According to a seventh aspect, this application provides a communication apparatus. The communication apparatus has a function for implementing any one of the first aspect to the sixth aspect. For example, the communication apparatus includes a corresponding module, unit, or means (means) for performing an operation in any one of the first aspect to the sixth aspect. The module, unit, or means may be implemented by software, may be implemented by hardware, or may be implemented by hardware executing corresponding software.

In a possible design, the communication apparatus includes a processing unit and a communication unit. The communication unit may be configured to receive and send signals, to implement communication between the communication apparatus and another apparatus. The processing unit may be configured to perform some internal operations of the communication apparatus. Functions performed by the processing unit and the communication unit may correspond to the operations in any one of the first aspect to the sixth aspect.

In a possible design, the communication apparatus includes a processor, and the processor may be configured to be coupled to a memory. The memory may store a necessary computer program or instructions for implementing the functions in any one of the first aspect to the sixth aspect. The processor may execute the computer program or instructions stored in the memory. When the computer program or the instructions are executed, the communication apparatus is enabled to implement the method according to any possible design or implementation of any one of the first aspect to the sixth aspect.

In a possible design, the communication apparatus includes a processor and a memory, and the memory may store a computer program or instructions necessary for implementing the functions in any one of the first aspect to the sixth aspect. The processor may execute the computer program or instructions stored in the memory. When the computer program or the instructions are executed, the communication apparatus is enabled to implement the method according to any possible design or implementation of any one of the first aspect to the sixth aspect.

In a possible design, the communication apparatus includes a processor and an interface circuit. The processor is configured to: communicate with another apparatus through the interface circuit, and perform the method according to any possible design or implementation of any one of the first aspect to the sixth aspect.

It may be understood that, in the seventh aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated on a same chip, or may be disposed on different chips. A type of the memory and a manner in which the memory and the processor are disposed are not limited in this embodiment of this application.

According to an eighth aspect, this application provides a communication system. The communication system may include a first communication apparatus and a second communication apparatus. The first communication apparatus is configured to perform the data transmission method according to the first aspect, and the second communication apparatus is configured to perform the data transmission method according to the second aspect. Alternatively, the first communication apparatus is configured to perform the data transmission method according to the third aspect, and the second communication apparatus is configured to perform the data transmission method according to the fourth aspect. Alternatively, the first communication apparatus is configured to perform the data transmission method according to the fifth aspect, and the second communication apparatus is configured to perform the data transmission method according to the sixth aspect.

According to a ninth aspect, this application provides a computer-readable storage medium. The computer storage medium stores computer-readable instructions. When a computer reads and executes the computer-readable instructions, the computer is enabled to perform the method according to any possible design of any one of the first aspect to the sixth aspect.

According to a tenth aspect, this application provides a computer program product. When a computer reads and executes the computer program product, the computer is enabled to perform the method according to any one of the first aspect to the sixth aspect and the possible designs of the first aspect to the sixth aspect.

According to an eleventh aspect, this application provides a chip. The chip includes a processor. The processor is coupled to a memory, and is configured to read and execute a software program stored in the memory to implement the method according to any one of the first aspect to the sixth aspect and the possible designs of the first aspect to the sixth aspect.

### BRIEF DESCRIPTION OF DRAWINGS

FIG. 1 is a diagram of an architecture of a communication system according to an embodiment of this application;
FIG. 2 is a diagram of a data packet transmission path according to an embodiment of this application;
FIG. 3 is a schematic flowchart of a data transmission method according to an embodiment of this application;
FIG. 4 is a diagram of another data packet transmission path according to an embodiment of this application;
FIG. 5 is a diagram of a format of a MAC CE according to an embodiment of this application;
FIG. 6 is a schematic flowchart of another data transmission method according to an embodiment of this application;
FIG. 7 is a diagram of still another data packet transmission path according to an embodiment of this application;
FIG. 8 is a diagram of a format of another MAC CE according to an embodiment of this application;
FIG. 9 is a diagram of still another data packet transmission path according to an embodiment of this application;
FIG. 10 is a schematic flowchart of still another data transmission method according to an embodiment of this application;
FIG. 11 is a diagram of still another data packet transmission path according to an embodiment of this application;
FIG. 12 is a diagram of still another data packet transmission path according to an embodiment of this application;
FIG. 13 is a diagram of a structure of a communication apparatus according to an embodiment of this application;
FIG. 14 is a diagram of a structure of a terminal device according to an embodiment of this application; and
FIG. 15 is a diagram of a structure of a network device according to an embodiment of this application.

### DESCRIPTION OF EMBODIMENTS

The following describes technical solutions of this application with reference to accompanying drawings.

The technical solutions provided in embodiments of this application may be applied to various communication systems, for example, an internet of things (internet of things, IoT) system, a narrowband internet of things (narrowband internet of things, NB-IoT) system, a long term evolution (long term evolution, LTE) system, a 5G communication system, and a new communication system emerging in future communication development, for example, a 6th generation (6th generation, 6G) communication system.

The technical solutions provided in embodiments of this application may also be applied to non-terrestrial network (non-terrestrial network, NTN) communication (which may also be referred to as non-terrestrial network communication), machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, an industrial internet, or another network. The IoT network may include, for example, an internet of vehicles. Communication modes in an internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in embodiments of this application may also be applied to a wireless local area network (wireless local area network, WLAN) system, for example, a wireless fidelity (wireless fidelity, Wi-Fi) system. For example, the technical solutions are applicable to the institute of electrical and electronics engineers (institute of electrical and electronics engineers, IEEE) 802.11 series protocols, such as the 802.11a/b/g protocol, the 802.11n protocol, the 802.11ac protocol, the 802.11ax protocol, the 802.11be protocol, or a next-generation protocol. The protocols are not enumerated one by one herein. The technical solutions provided in embodiments of this application may also be applied to a wireless personal area network (wireless personal area network, WPAN) based on an ultra-wideband (ultra-wideband, UWB) technology, for example, are applicable to the 802.15.4a protocol, the 802.15.4z protocol, or the 802.15.4ab protocol in the IEEE 802.15 series protocols, or a future-generation UWB WPAN protocol. The protocols are not enumerated one by one herein. A person skilled in the art easily understands that various aspects in embodiments of this application may be extended to other networks using various standards or protocols, for example, a Bluetooth (Bluetooth) network, a high performance radio local area network (local area network, LAN) (high performance radio LAN, HIPERLAN) (a wireless standard similar to the IEEE 802.11 standard, mainly used in Europe), a wide area network (wide area network, WAN), or another network known or developed in the future. Therefore, regardless of used coverage and a used wireless access protocol, the technical solutions provided in embodiments of this application are applicable to any appropriate wireless network.

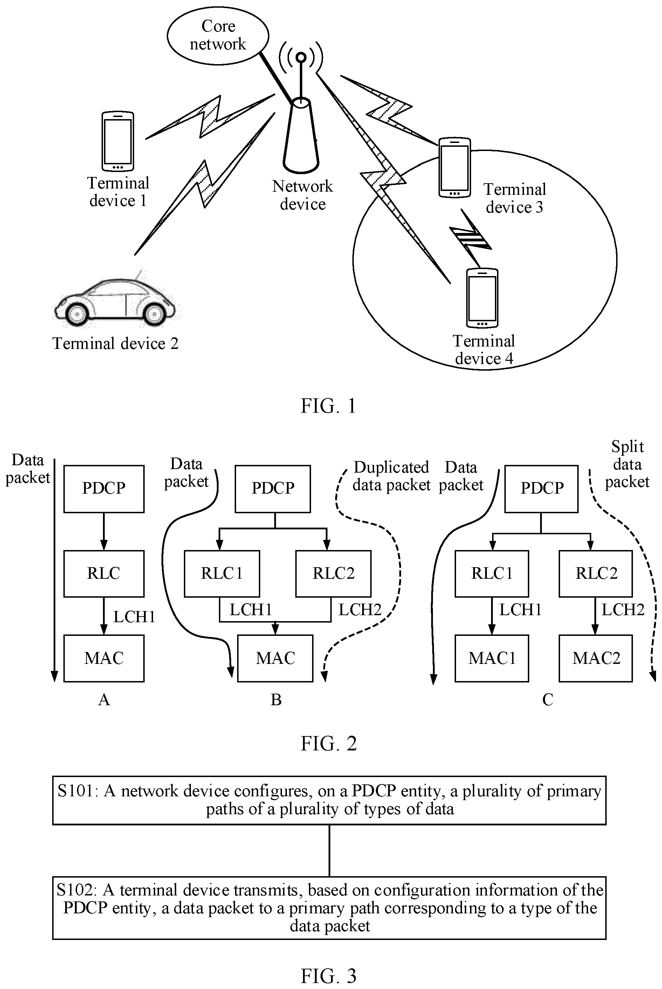

FIG. 1 is a diagram of an architecture of a communication system according to an embodiment of this application. As shown in FIG. 1, the communication system may include a core network, at least one network device, and at least one terminal device, for example, a terminal device 1 to a terminal device 4 in FIG. 1. For example, a terminal device 3 and the terminal device 4 shown in FIG. 1 may directly communicate with each other. For example, direct communication between terminal devices may be implemented by using a sidelink (sidelink) in a D2D technology. The terminal device 1 to the terminal device 4 each may communicate with the network device. It may be understood that the terminal device 3 and the terminal device 4 may directly communicate with the network device, or may indirectly communicate with the network device, for example, communicate with the network device through another terminal device (not shown in FIG. 1). It should be understood that FIG. 1 shows an example of one network device, a plurality of terminal devices, and a communication link between communication devices. Optionally, the communication system may include a plurality of network devices, and another quantity of terminal devices, for example, more or fewer terminal devices, may be included in coverage of each network device. This is not limited in embodiments of this application. The following describes in detail the terminal device and the network device.

The terminal device is an apparatus having a wireless transceiver function. The terminal device may communicate with an access network device (or referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor terminal device, and a handheld or vehicle-mounted terminal device; or may be deployed on water (for example, on a ship). In a possible implementation, the terminal device may be a handheld device having a wireless communication function, a vehicle-mounted device, a wearable device, a sensor, a terminal in an internet of things, a terminal in an internet of vehicles, an uncrewed aerial vehicle, a terminal device in any form in a 5G network or a future network, or the like. This is not limited in embodiments of this application. It may be understood that the terminal device described in embodiments of this application may include a vehicle (for example, a car) in the internet of vehicles, and may further include a vehicle-mounted device, a vehicle-mounted terminal, or the like in the internet of vehicles. A specific form of the terminal device used in the internet of vehicles is not limited in embodiments of this application. It may be understood that terminal devices shown in embodiments of this application may further communicate with each other by using a technology such as D2D, V2X, or M2M. A communication method between the terminal devices is not limited in embodiments of this application.

The network device may be an apparatus that is deployed in a radio access network and that provides a wireless communication service for a terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having a wireless transceiver function, and includes but is not limited to the base station shown above (including a base station deployed on a satellite). Alternatively, the network device may be an apparatus that has a base station function in 6G. Optionally, the network device may be an access node, a wireless relay node, a wireless backhaul node, or the like in a Wi-Fi system. Optionally, the network device may be a radio controller in a cloud radio access network (cloud radio access network, CRAN) scenario. Optionally, the network device may be a wearable device, a vehicle-mounted device, or the like. Optionally, the network device may be a small cell, a transmission reception point (transmission reception point, TRP) (or may be referred to as a transmission point), or the like. It may be understood that the network device may alternatively be a base station, a satellite, or the like in a future evolved public land mobile network (public land mobile network, PLMN). The network device may alternatively be a communication apparatus or the like having a base station function in a non-terrestrial communication system, D2D, V2X, or M2M. A specific type of the network device is not limited in embodiments of this application. In systems using different radio access technologies, names of communication apparatuses having functions of the network device may be different, and are not listed one by one in embodiments of this application. Optionally, in some deployments of the network device, the network device may include a central unit (central unit, CU), a distributed unit (distributed unit, DU), and the like. The network device including the CU and the DU may be understood as follows: Protocol layers are split, functions of some protocol layers are centrally controlled by the CU, functions of some or all remaining protocol layers are distributed in the DU, and the CU centrally controls the DU. In some other deployments of the network device, the CU may be further divided into a CU-control plane (control plane, CP), a CU-user plane (user plane, UP), and the like. In still some other deployments of the network device, the network device may alternatively be of an open radio access network (open radio access network, ORAN) architecture or the like. A specific deployment manner of the network device is not limited in embodiments of this application.

A network architecture and a service scenario that are described in embodiments of this application are intended to describe the technical solutions in embodiments of this application more clearly, but do not constitute any limitation on the technical solutions provided in embodiments of this application. A person skilled in the art may know that with evolution of the network architecture and emergence of new service scenarios, the technical solutions provided in embodiments of this application are also applicable to similar technical problems.

The following explains and describes related technologies in embodiments of this application. It should be noted that these explanations are intended to make embodiments of this application easier to understand, but should not be considered as a limitation on the protection scope claimed in this application.

### 1. Quality of service (quality of service, QoS)

A 5G system uses a QoS flow (QoS flow)-based QoS architecture to ensure quality of service of different services. A 5GC establishes one or more protocol data unit (protocol data unit, PDU) sessions (PDU sessions) for UE, and a RAN establishes one or more data radio bearers (data radio bearers, DRBs) for each PDU session. A QoS flow is a data flow with a same QoS requirement in a PDU session. The QoS flow is transmitted at an access stratum (access stratum, AS) on a DRB, and same forwarding and processing are performed on data packets in one DRB.

The 5GC identifies a feature of a data packet, including a source internet protocol (internet protocol, IP) address, a destination IP address, a source port number, a destination port number, and a transport layer protocol number of the data packet, maps data packets with a same feature to a same QoS flow, and adds a QoS flow identifier (QoS flow identifier, QFI) to a header of the data packet to identify the QoS flow to which the data packet belongs.

Different QoS flows are mapped to different DRBs for transmission, to meet different QoS requirements. Alternatively, a plurality of QoS flows may be mapped to a same DRB, but a same QoS flow cannot be mapped to a plurality of DRBs.

### 2. DRB

The DRB is a radio bearer used by an access stratum to transmit service data. A functional entity set of one DRB on a terminal device side includes one packet data convergence protocol (packet data convergence protocol, PDCP) entity, at least one radio link control (radio link control, RLC) entity corresponding to the PDCP entity, a media access control (media access control, MAC) entity corresponding to the RLC entity, and a physical layer (physical layer, PHY) entity corresponding to the MAC entity.

The DRB provides same forwarding and processing for data packets carried on the DRB. In a data packet transmission path shown in A in FIG. 2, when a PDCP entity of a DRB is associated with one RLC entity, all data packets carried on the DRB are transmitted on a logical channel (logical channel, LCH) corresponding to the RLC entity, that is, using a same logical resource. In data packet transmission paths shown in B in FIG. 2, when a PDCP entity is associated with at least two RLC entities, a network indicates a primary path (primary path) for a DRB of UE through radio resource control (radio resource control, RRC) configuration, and the PDCP entity delivers a data packet to an RLC entity (for example, RLC1) corresponding to the primary path for transmission. One primary path may include one PDCP entity, one RLC entity, and one MAC entity, and transmission is performed between the RLC entity and the MAC entity on a logical channel. When the PDCP entity is associated with at least two RLC entities, the network may further indicate the UE to activate PDCP duplication (PDCP duplication). To be specific, a data packet carried on the DRB is duplicated to a logical channel corresponding to an RLC entity (for example, RLC2) other than the RLC entity corresponding to the primary path for transmission, to improve data transmission reliability. In data packet transmission paths shown in C in FIG. 2, when RLC entities associated with a PDCP entity are associated with at least two different MAC entities, a DRB is a split bearer (split bearer). To be specific, data packets carried on the DRB may be split to logical channels corresponding to at least two RLC entities (one RLC entity (for example, RLC 1) corresponds to a primary path, and another split RLC entity (for example, RLC2) corresponds to a split secondary path) for transmission, to improve a transmission rate. It may be understood that the foregoing data packet forwarding and processing are always for all data packets on the DRB.

The QoS architecture in the 5G system can implement differentiated processing of different services. Different service data is mapped to different QoS flows and then transmitted on different DRBs, to meet different QoS requirements.

However, data of a specific service from a same application, for example, video data packets generated by a specific XR application, has a same IP quintuple (including a source IP address, a destination IP address, a source port number, a destination port number, and a transport layer protocol number). The 5G core network (5GC) may map the data packets to a same QoS flow, but the data packets cannot be carried on different DRBs. In other words, an existing QoS flow cannot distinguish between data with different degrees of importance (for example, an I-frame and a P-frame in an XR service) generated by a same service.

Specifically, at the AS, data of a QoS flow is carried on a DRB. Although one DRB may be associated with a plurality of logical channels, in a data forwarding policy, data packets on one DRB are always processed in a same manner, and differentiated processing on data with different degrees of importance cannot be implemented.

Therefore, when data with different degrees of importance is carried on a same DRB, how to perform differentiated processing to obtain different transmission quality and implement layered QoS is a problem that needs to be urgently resolved currently.

To resolve this problem, FIG. 3 shows a data transmission method according to an embodiment of this application. The method is used to perform differentiated processing on different types (for example, with different degrees of importance or different priorities) of data carried on a same DRB. The method includes the following steps.

S101: When one PDCP entity of the DRB is associated with a plurality of RLC entities, a network device configures, on the PDCP entity, a plurality of primary paths (primary paths) of a plurality of types of data.

That the network device configures, on the PDCP entity, the plurality of primary paths of the plurality of types of data may include: The network device determines configuration information of the PDCP entity, and sends the configuration information to a terminal device. Correspondingly, the terminal device receives the configuration information of the PDCP entity from the network device. The configuration information indicates the plurality of primary paths that are of the plurality of types of data corresponding to the PDCP entity and that are configured by the network device for the terminal device. In other words, the configuration information includes information about the plurality of primary paths, the configuration information includes indication information of the plurality of paths, or the configuration information includes configuration information of the plurality of paths.

It may be understood that "a plurality of" in embodiments of this application is two or more. In other words, "a plurality of" in embodiments of this application may be replaced with "two or more" or "at least two".

In an example, the network device may configure the plurality of primary paths for the DRB by using RRC signaling.

The configuration information indicates the plurality of primary paths of the plurality of different types of data, and one type of data corresponds to one primary path. In an example, the configuration information includes information about a first primary path of data of a first type and information about a second primary path of data of a second type. The data of the first type may be data with a high degree of importance (or a high priority), for example, data of an I-frame. The data of the second type may be data with a low degree of importance (or a low priority), for example, data of a P-frame. RLC entities or MAC entities corresponding to the first primary path and the second primary path are not necessarily different, and may be specifically determined by the network device based on channel quality of each path and/or a data volume of each type of data.

The configuration information is used to configure, for a PDCP entity of the terminal device, a parameter related to the PDCP entity, for example, a PDCP configuration information element (for example, PDCP-Config). When the PDCP entity is associated with more than one RLC entity, the PDCP configuration information element may include primary path indication information, for example, the following primaryPath information element (or field):

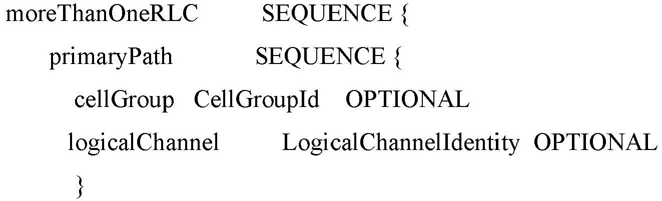

The primaryPath information element may include a cell group (CellGroup) identity (identity, ID) (CellGroupId) and a logical channel (logicalChannel) identity (LogicalChannelIdentity) (that is, an LCH ID). The LCH ID is associated with one RLC entity. The terminal device (or the PDCP entity, where the terminal device and the PDCP entity may be interchangeably used in the following descriptions and are not distinguished) may determine, based on the LCH ID, the RLC entity indicated by the primary Path information element. CellGroupId is associated with one MAC entity. The terminal device may determine, based on CellGroupId, the MAC entity indicated by the primary Path information element. When the DRB is associated with one MAC entity, the primary Path information element may not include CellGroupId.

The following describes possible forms of the configuration information by using several examples.
(1) When the PDCP entity of the DRB is associated with two RLC entities, the configuration information may include indication information of a primary path of one type of data, and a primary path of the other type of data may be determined by excluding, in the two RLC entities, an RLC entity indicated by the indication information of the primary path included in the configuration information. For example, if the PDCP entity of the DRB is associated with a first RLC entity and a second RLC entity, the configuration information includes indication information of the first primary path of the data of the first type, and the first primary path corresponds to the first RLC entity, the terminal device may determine, based on the first primary path of the data of the first type, that the second primary path of the data of the second type corresponds to the second RLC entity.

Indication information of a primary path indicates one primary path, and indication information of a primary path of one type of data includes identification information of one RLC entity. The identification information of the RLC entity may be any information that can identify the RLC entity, for example, an LCH ID corresponding to the RLC entity. The terminal device may determine, based on the identification information of the RLC entity, the RLC entity corresponding to the primary path of the type of data. Optionally, the indication information of the primary path of the type of data further includes identification information of one MAC entity, and the identification information of the MAC entity may be any information that can identify the MAC entity, for example, a cell group ID corresponding to the MAC entity.

Further, the configuration information may include indication information #1. The indication information #1 indicates that the second primary path is configured for the data of the second type. In this case, the terminal device may determine, based on the first primary path of the data of the first type in the configuration information and the indication information #1, that the second primary path of the data of the second type corresponds to the second RLC entity other than the first RLC entity. In another possible implementation, when a value of the indication information #1 is a specific value, the indication information #1 indicates that the second primary path is configured for the data of the second type. For example, when the value is true (true), the indication information #1 indicates that the second primary path is configured for the data of the second type; and when the value is false (false), the indication information #1 indicates that the second primary path is not configured for the data of the second type. In this example, the indication information #1 may be of a bool (bool) type. For another example, when the value is one or more specific enumerated values, the indication information #1 indicates that the second primary path is configured for the data of the second type; and when the value is a value other than the one or more specific enumerated values, the indication information #1 indicates that the second primary path is not configured for the data of the second type. In this example, the indication information #1 may be of an enumeration type.

In an example, the configuration information may include the following information elements:

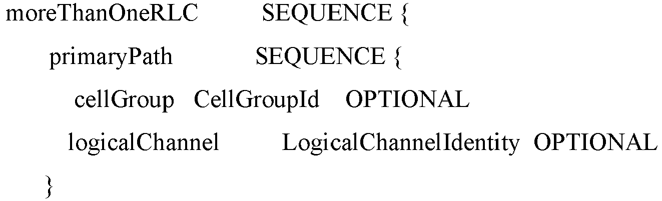

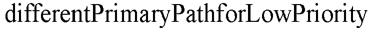

The primaryPath information element is indication information of a primary path of high-priority data, and differentPrimaryPathforLowPriority is the indication information #1.

(2) When the PDCP entity of the DRB is associated with at least two RLC entities, the configuration information may include indication information of a plurality of primary paths of a plurality of different types of data, for example, indication information of the first primary path of the data of the first type and indication information of the second primary path of the data of the second type.

For indication information of a primary path, refer to the descriptions in (1).

In an example, the configuration information may include the following information elements:

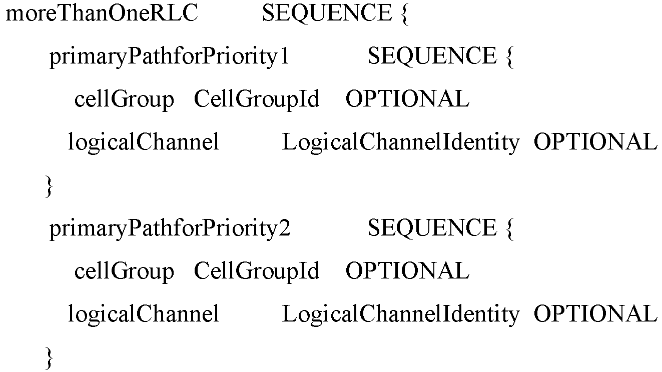

The primaryPathforPriority1 information element is indication information of a primary path of data with a priority 1, and the primaryPathforPriority2 information element is indication information of a primary path of data with a priority 2. In addition, it may be understood that, when primaryPathforPriority1 and primaryPathforPriority2 exist, an RLC entity indicated by primaryPathforPriority1 is used as a primary path for a data packet corresponding to the priority 1, and an RLC entity indicated by primaryPathforPriority2 is used as a primary path for a data packet corresponding to the priority 2. If there are more types of data, the rest may be deduced by analogy.

Alternatively, the configuration information includes the following information elements:

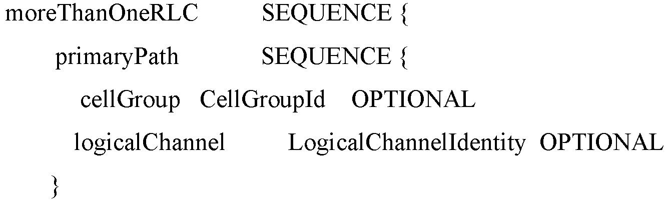

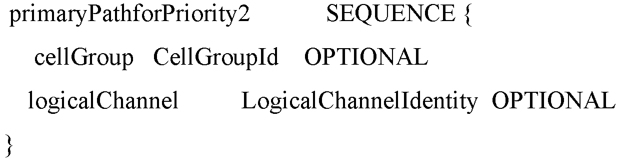

By default, the primary Path information element is indication information of a primary path of data with a priority 1, and the primaryPathforPriority2 information element is indication information of a primary path of data with a priority 2. In addition, it may be understood that, when primaryPath and primaryPathforPriority2 exist, an RLC entity indicated by primaryPath is used as a primary path for a data packet corresponding to the priority 1, and an RLC entity indicated by primaryPathforPriority2 is used as a primary path for a data packet corresponding to the priority 2.

In addition, the priority 1 may be a high priority, and the priority 2 may be a low priority. When there is still a priority 3, the priority 1 may be a high priority, the priority 2 may be a medium priority, and the priority 3 is a low priority.

It should be noted that the foregoing (1) and (2) are two possible manners of configuring, by using RRC, different primary paths corresponding to different data types for one DRB, and do not constitute a limitation on this embodiment of this application.

In addition, "the high degree of importance and the low degree of importance" or "the high priority and the low priority" represents a data division manner. During actual application, the PDCP entity may classify data packets into a plurality of different types based on information carried in data packet headers, such as QFIs and PDU set importance parameters (PDU set importance); or the PDCP entity classifies data packets into a plurality of different types according to an indication of a core network or an application layer, or in another implementation. In this embodiment of this application, a data type classification manner is not limited, and a quantity of classified types is not limited. For example, a packet header of a data packet 1 carries a QFI 1, a packet header of a data packet 2 carries a QFI 2, the QFI 1 identifies QoS of an I-frame data packet, and the QFI 2 identifies QoS of a P-frame data packet. In this case, the PDCP entity classifies the data packet 1 and the data packet 2 based on the QFI 1 and the QFI 2. For another example, a packet header of a data packet 1 carries a PDU set importance parameter with a value of a value 1, a packet header of a data packet 2 carries a PDU set importance parameter with a value of a value 2, the value 1 identifies that the data packet 1 belongs to an I-frame data packet, and the value 2 identifies that the data packet 2 belongs to a P-frame data packet. In this case, the PDCP entity classifies the data packet 1 and the data packet 2 based on the value 1 and the value 2. For another example, the core network or the application layer indicates, to the PDCP entity by using a cross-layer message, that a data packet 1 is an I-frame data packet and a data packet 2 is a P-frame data packet. In this case, the PDCP entity classifies the data packet 1 and the data packet 2 according to an indication of the core network or the application layer.

S102: The terminal device transmits, based on the configuration information of the PDCP entity, a data packet to a primary path corresponding to a type of the data packet.

For example, at least a first data packet of the first type is transmitted on the first primary path. That at least the first data packet of the first type is transmitted on the first primary path means that the terminal device transmits at least a data packet of the first type on the first primary path, and may further transmit a data packet of the second type on the second primary path. If there are more types of data, the rest may be deduced by analogy.

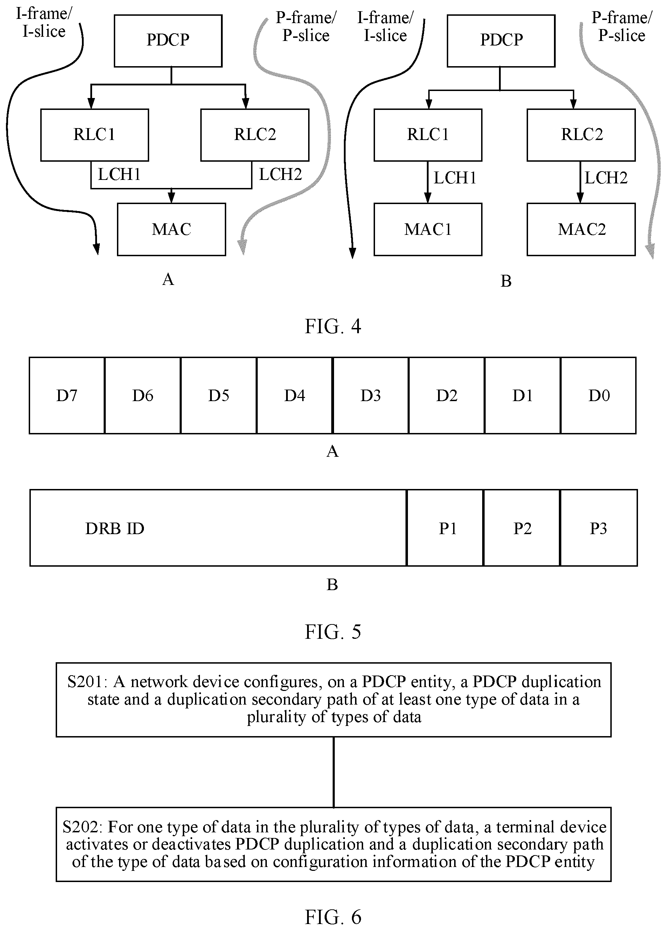

In an example, in data packet transmission paths shown in A in FIG. 4, when the configuration information includes primaryPath-I=RLC1 and primaryPath-I=RLC2, an I-frame or I-slice data packet is transmitted on a primary path of PDCP-RLC1-MAC, and a P-frame or P-slice data packet is transmitted on a primary path of PDCP-RLC2-MAC. In data packet transmission paths shown in B in FIG. 4, when the configuration information includes primaryPath-I=RLC1 and primaryPath-I=RLC2, an I-frame or I-slice data packet is transmitted on a primary path of PDCP-RLC1-MAC1, and a P-frame or P-slice data packet is transmitted on a primary path of PDCP-RLC2-MAC2.

Correspondingly, when reporting a data volume (data volume) to a MAC entity, the PDCP entity also separately reports data volumes of different types of data to MAC entities in corresponding primary paths. For example, in B in FIG. 4, the PDCP entity reports a data volume of the I-frame or I-slice data packet to MAC1, and reports a data volume of the P-frame or P-slice data packet to MAC2. In this way, the MAC entity may subsequently dynamically activate or deactivate a primary path of a corresponding type of data based on the data volume. Further, the MAC entity may report a buffer status report (buffer status report, BSR) to the network device based on the data volume, so that the network device schedules a resource.

Optionally, a configuration of the primary path may also be dynamically activated and deactivated. Specifically, the network device may indicate, by using a MAC control element (control element, CE) (MAC CE) or downlink control information (downlink control information, DCI), whether to activate primary paths of different types of data. For example, when a primary path of a specific type is activated, the PDCP entity delivers a data packet of the type to the path. When the primary path is deactivated, the PDCP entity delivers the data packet of the type to a default primary path of the DRB, that is, the RLC entity indicated by the primaryPath information element. FIG. 5 shows a possible form of a MAC CE. As shown in A in FIG. 5, when each DRB is associated with two RLC entities, Di (for example, DO to D7 in the figure) indicates whether to activate another primary path for a DRB i. For example, when a value of Di is 1, it indicates to activate a primary path of a specific type, for example, activate a primary path of low-priority data; and when the value of Di is 0, it indicates to deactivate the primary path of the specific type, for example, deactivate the primary path of the low-priority data, and a low-priority data packet is delivered to a default primary path of the DRB, that is, an RLC entity indicated by a primary Path information element. As shown in B in FIG. 5, when a DRB is associated with two or more RLC entities, a DRB ID indicates a DRB for which the MAC CE is used, and Pi (for example, P1 to P3 in the figure) indicates whether to activate a primary path of data of a type corresponding to Pi. For example, when a value of Pi is 1, it indicates to activate a primary path of a specific type; and when the value of Pi is 0, it indicates to deactivate the primary path of the specific type, and a data packet of the type may be delivered to a default primary path of the DRB, that is, an RLC entity indicated by a primary Path information element.

It may be understood that deactivation in embodiments of this application may be remaining in an inactive state, or changing from an active state to an inactive state. Optionally, the network device may adjust, in the RRC signaling, configurations of primary paths of different types of data, for example, delete a primary path of a specific type of data, or change an RLC entity corresponding to a primary path of a specific type.

It should be noted that a quantity of RLC entities associated with the PDCP entity is not limited in this embodiment of this application. When the PDCP entity is associated with more than two (for example, four) RLC entities, the RRC configuration and the MAC CE format need to be correspondingly extended.

In the method, when the PDCP entity is associated with the plurality of RLC entities, respective primary paths are separately indicated for different types of data, so that different data packets are transmitted on respective logical channels, to implement layered QoS. This can improve transmission reliability of data with high importance in the different types of data, and reduce radio resource consumption of data with low importance in the different types of data, thereby improving a system capacity. For example, the data with the high importance is transmitted on a path with better channel quality, to achieve higher reliability; and the data with the low importance may be transmitted on a path with worse channel quality, to relieve resource pressure.

In addition to the method shown in FIG. 3, FIG. 6 shows another data transmission method according to an embodiment of this application. The method is used to perform differentiated processing on different types of data carried on a same DRB. The method includes the following steps.

S201: When one PDCP entity of the DRB is associated with a plurality of RLC entities, a network device configures, on the PDCP entity, a PDCP duplication state and a duplication secondary path of at least one type of data in a plurality of types of data.

That the network device configures, on the PDCP entity, the PDCP duplication state and the duplication secondary path of the at least one type of data may include: The network device determines configuration information of the PDCP entity, and sends the configuration information to a terminal device. Correspondingly, the terminal device receives the configuration information of the PDCP entity from the network device. The configuration information indicates the PDCP duplication state and the duplication secondary path that are of the at least one type of data corresponding to the PDCP entity and that are configured by the network device for the terminal device. In other words, the configuration information includes PDCP duplication state information and/or information about duplication secondary paths of one or more types of data, the configuration information includes indication information of PDCP duplication states and/or indication information of duplication secondary paths of one or more types of data, or the configuration information includes configuration information of PDCP duplication states and/or configuration information of duplication secondary paths of one or more types of data.

It may be understood that "at least one" in embodiments of this application is one or more.

In an example, the network device may configure the PDCP duplication state and the duplication secondary path of the at least one type of data for the DRB by using RRC signaling.

The configuration information indicates the PDCP duplication state and the duplication secondary path of the at least one type of data in the plurality of different types of data. When a PDCP duplication state is configured for one type of data, the type of data corresponds to one PDCP duplication state and at least one duplication secondary path. When a PDCP duplication state is not configured for one type of data, the type of data may be transmitted on a primary path, no duplication is performed, and no duplication secondary path exists.

For example, the configuration information includes PDCP duplication state information and/or information about at least one duplication secondary path of data of a first type, and PDCP duplication state information and/or information about at least one duplication secondary path of data of a second type. The data of the first type may be data with a high degree of importance (or a high priority), for example, data of an I-frame. The data of the second type may be data with a low degree of importance (or a low priority), for example, data of a P-frame. The PDCP duplication state means whether the PDCP entity is to activate PDCP duplication and/or which duplication secondary paths are to be activated by the PDCP entity. The duplication secondary path is a path for transmitting a duplicated data packet when PDCP duplication is activated. One duplication secondary path may include one PDCP entity, one RLC entity, and one MAC entity, and transmission is performed between the RLC entity and the MAC entity on a logical channel.

The configuration information is used to configure, for a PDCP entity of the terminal device, a parameter related to the PDCP entity, for example, a PDCP configuration information element (for example, PDCP-Config). When the PDCP entity is associated with more than one RLC entity, the PDCP configuration information element may include indication information of a primary path and PDCP duplication state information. The indication information of the primary path and the PDCP duplication state information may be, for example, the following primary Path information element (or field) and pdcp-Duplication information element respectively:

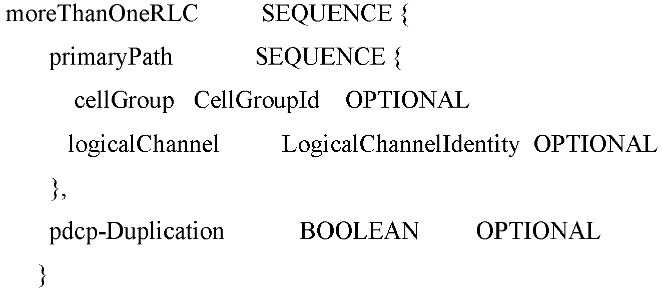

When the PDCP entity is associated with more than two RLC entities, the PDCP configuration information element may further include indication information of a duplication secondary path, for example, the following duplicationState information element:

```
moreThanTwoRLC-DRB SEQUENCE {
    duplicationState SEQUENCE (SIZE (3)) OF BOOLEAN OPTIONAL
    ...
     }
```

For the primaryPath information element, refer to related descriptions in FIG. 3. Details are not described herein again. When a value of the pdcp-Duplication information element is true (true), it indicates that PDCP duplication is activated, to be specific, in addition to transmitting a data packet to an RLC entity indicated by the primaryPath information element, the data packet is further duplicated and transmitted to another RLC entity different from the RLC entity indicated by the primaryPath information element. When the PDCP entity is associated with two RLC entities, the another RLC entity is an RLC entity other than the RLC entity indicated by the primaryPath information element. When the PDCP entity is associated with more than two RLC entities, the another RLC entity is an RLC entity indicated by the duplicationState information element.

It should be noted that, when the PDCP entity is associated with more than two RLC entities, the pdcp-Duplication information element may be ignored, and an activated duplication secondary path is determined by using the duplicationState information element.

The following describes possible forms of the configuration information in this embodiment of this application by using several examples.
(1) When the PDCP entity of the DRB is associated with two RLC entities, the configuration information may include a plurality of pieces of PDCP duplication state information of a plurality of different types of data. The PDCP duplication state information indicates whether PDCP duplication is activated, and one type of data corresponds to one piece of PDCP duplication state information. For example, the configuration information includes the PDCP duplication state information of the data of the first type and the PDCP duplication state information of the data of the second type.

For example, if the PDCP entity of the DRB is associated with a first RLC entity and a second RLC entity, and a primary path of the data of the first type corresponds to the first RLC entity, the terminal device may determine, based on the PDCP duplication state information of the data of the first type, whether to activate PDCP duplication of the data of the first type. Specifically, when a value of the PDCP duplication state information of the data of the first type is true (true), it is determined to activate PDCP duplication of the data of the first type; and when the value is false (false), it is determined to deactivate PDCP duplication of the data of the first type. In a case of activating PDCP duplication of the data of the first type, the terminal device may determine that a duplication secondary path of the data of the first type does not correspond to the first RLC entity corresponding to the primary path, that is, corresponds to the second RLC entity. A primary path of the data of the second type corresponds to the second RLC entity, and the terminal device may determine, based on the PDCP duplication state information of the data of the second type, whether to activate PDCP duplication of the data of the second type. Specifically, when a value of the PDCP duplication state information of the data of the second type is true (true), it is determined to activate PDCP duplication of the data of the second type; and when the value is false (false), it is determined to deactivate PDCP duplication of the data of the second type. In a case of activating PDCP duplication of the data of the second type, the terminal device may determine that a duplication secondary path of the data of the second type does not correspond to the second RLC entity corresponding to the primary path, that is, corresponds to the first RLC entity. The PDCP duplication state information whose value may be true or false may be of a bool type. For how to determine primary paths of different types of data, refer to the method shown in FIG. 3 or an existing method.

It may be understood that, when the PDCP entity of the DRB is associated with two RLC entities, the configuration information may include the plurality of pieces of PDCP duplication state information of the plurality of different types of data. The terminal device can determine, based on the plurality of pieces of duplication state information, whether to activate PDCP duplication of the plurality of different types of data, and then determine a duplication secondary path of a specific type of data based on a primary path of the type of data. Therefore, in this case, the configuration information may also be understood as indicating a plurality of PDCP duplication states and duplication secondary paths of the plurality of different types of data.

In an example, the configuration information may include the following information elements:

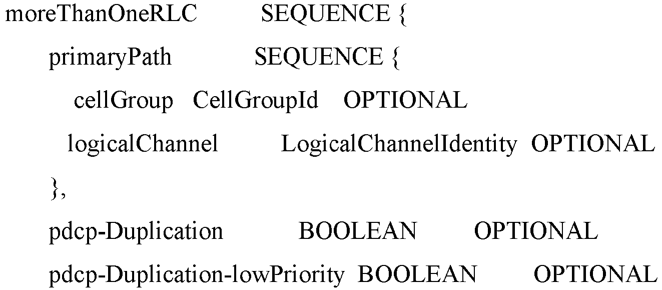

In this example, when the pdcp-Duplication-lowPriority information element exists, it indicates that PDCP duplication is independently configured for low-priority data. In addition, when a value of the pdcp-Duplication-lowPriority information element is true, it indicates to activate PDCP duplication of low-priority data; and when the value is false, it indicates to deactivate PDCP duplication of low-priority data. When the pdcp-Duplication-lowPriority information element exists, the pdcp-Duplication information element indicates PDCP duplication of high-priority data. In addition, when a value of the pdcp-Duplication information element is true, it indicates to activate PDCP duplication of the high-priority data; and when the value is false, it indicates to deactivate PDCP duplication of the high-priority data.

(2) When the PDCP entity of the DRB is associated with at least two RLC entities, the configuration information may include a plurality of pieces of duplication secondary path activation state information of a plurality of different types of data, where one type of data corresponds to one piece of duplication secondary path activation state information. For example, the configuration information includes duplication secondary path activation state information of the data of the first type and duplication secondary path activation state information of the data of the second type.

Duplication secondary path activation state information of one type of data indicates whether to activate or deactivate a duplication secondary path of the type of data. The duplication secondary path activation state information may be a bitmap (bitmap)-type information element, that is, includes one or more bits, each bit corresponds to one RLC entity, and each bit indicates whether to activate a duplication secondary path corresponding to the RLC entity. For example, when a value of a specific bit is 1, it indicates to activate a duplication secondary path corresponding to the bit, in other words, data is duplicated and then transmitted to an RLC entity corresponding to the bit.

It may be understood that, when the PDCP entity of the DRB is associated with at least two RLC entities, the configuration information may include a plurality of pieces of duplication secondary path activation state information of a plurality of different types of data. For duplication secondary path activation state information of one type of data, the terminal device can determine, based on the duplication secondary path activation state information, whether to activate a duplication secondary path of the type of data. Activating at least one duplication secondary path may be understood as activating PDCP duplication. Deactivating all duplication secondary paths may be understood as deactivating PDCP duplication. In other words, the terminal device can determine a PDCP duplication state and a duplication secondary path of each type of data based on the plurality of pieces of duplication secondary path activation state information, of the plurality of different types of data, included in the configuration information. Therefore, the configuration information may be understood as indicating a plurality of PDCP duplication states and duplication secondary paths of the plurality of different types of data.

In an example, the configuration information may include the following information elements:

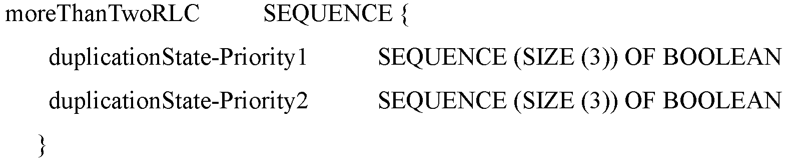

The duplicationState-Priority1 information element is duplication secondary path activation state information of data with a priority 1, and indicates which duplication secondary paths for PDCP duplication of the data with the priority 1 are to be activated; and duplicationState-Priority2 is duplication secondary path activation state information of data with a priority 2, and indicates which duplication secondary paths for PDCP duplication of the data with the priority 2 are to be activated. When the duplicationState-Priority1 information element and the duplicationState-Priority2 information element exist, a data packet corresponding to the priority 1 is duplicated to a duplication secondary path corresponding to a bit whose value is "1" in duplicationState-Priority1, and a data packet corresponding to the priority 2 is duplicated to a duplication secondary path corresponding to a bit whose value is "1" in duplicationState-Priority2.

Alternatively, the configuration information includes the following information elements:

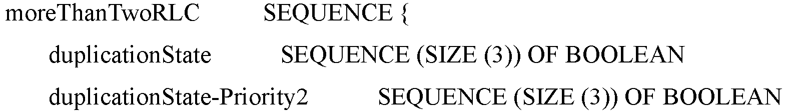

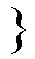

By default, the duplicationState information element is duplication secondary path activation state information of data with a priority 1, and indicates which duplication secondary paths for PDCP duplication of the data with the priority 1 are to be activated; and duplicationState-Priority2 is duplication secondary path activation state information of data with a priority 2, and indicates which duplication secondary paths for PDCP duplication of the data with the priority 2 are to be activated. When the duplicationState information element and the duplicationState-Priority2 information element exist, a data packet corresponding to the priority 1 is duplicated to a duplication secondary path corresponding to a bit whose value is "1" in duplicationState, and a data packet corresponding to the priority 2 is duplicated to a duplication secondary path corresponding to a bit whose value is "1" in duplicationState-Priority2. If there are more types of data, the rest may be deduced by analogy. For the priority, refer to related descriptions in FIG. 3. Details are not described herein again.

(3) When the PDCP entity of the DRB is associated with at least two RLC entities, the configuration information may include a plurality of pieces of indication information of a duplication secondary path that are of a plurality of different types of data, and a plurality of pieces of indication information #2 indicating whether to activate a specific duplication secondary path that are of the plurality of different types of data. One type of data corresponds to one piece of indication information of a duplication secondary path and at least one piece of indication information #2. For example, the configuration information includes duplication secondary path information of the data of the first type and indication information #2 indicating whether to activate a specific duplication secondary path of the first type, and duplication secondary path information of the data of the second type and indication information #2 indicating a specific duplication secondary path of the second type.

The indication information of the duplication secondary path indicates at least one duplication secondary path. Indication information of a duplication secondary path of a type of data may be a bitmap-type information element, that is, includes one or more bits, and each bit corresponds to one RLC entity. For example, when a value of a specific bit is 1, it indicates to configure a duplication secondary path corresponding to the bit. Indication information #2 of a type of data may be included in an RLC configuration information element (for example, RLC-BearerConfig), and indicates whether an RLC entity is to be activated as a duplication secondary path. For example, when the indication information #2 exists in the RLC configuration information element, it indicates to activate the duplication secondary path corresponding to the RLC entity; and when the indication information #2 does not exist in the RLC configuration information element, it indicates to deactivate the duplication secondary path corresponding to the RLC entity. Alternatively, when a value of the indication information #2 is true, it indicates to activate the duplication secondary path corresponding to the RLC entity; and when the value of the indication information #2 is false, it indicates to deactivate the duplication secondary path corresponding to the RLC entity. In this case, the indication information #2 may be of a bool type.

It may be understood that, when the PDCP entity of the DRB is associated with at least two RLC entities, the configuration information may include the plurality of pieces of indication information of a duplication secondary path that are of the plurality of different types of data, and the plurality of pieces of indication information #2 indicating whether to activate a specific duplication secondary path that are of the plurality of different types of data. For indication information of a duplication secondary path and indication information #2 of one type of data, the terminal device can determine, based on the indication information of the duplication secondary path, to configure a duplication secondary path of the type of data; and determine, based on the indication information #2, whether to activate a duplication secondary path corresponding to the indication information #2. Activating at least one duplication secondary path may be understood as activating PDCP duplication. Deactivating all duplication secondary paths may be understood as deactivating PDCP duplication. In other words, the terminal device can determine a PDCP duplication state and a duplication secondary path of each type of data based on the plurality of pieces of indication information of a duplication secondary path and the plurality of pieces of indication information #2, of the plurality of different types of data, included in the configuration information. Therefore, the configuration information may be understood as indicating a plurality of PDCP duplication states and duplication secondary paths of the plurality of different types of data.

In an example, the configuration information includes the following information elements:

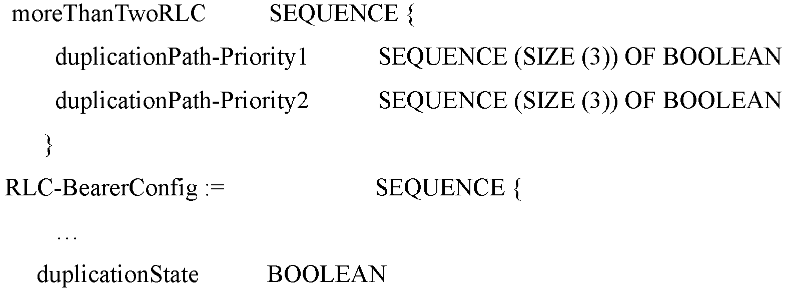

The duplicationPath-Priority1 information element is indication information of a duplication secondary path of data with a priority 1, and indicates a duplication secondary path of the data with the priority 1; and the duplicationPath-Priority2 information element is indication information of a duplication secondary path of data with a priority 2, and indicates a duplication secondary path of the data with the priority 2. duplicationState is indication information #2 of the data with the priority 1, and indicates whether an RLC entity is to be activated as a duplication secondary path. When duplicationPath-Priority1 exists, the PDCP entity uses an RLC entity corresponding to a bit whose value is "1" in duplicationPath-Priority1 as a duplication secondary path of a data packet with the priority 1. When duplicationState of the RLC entity exists and a value is true, the data packet with the priority 1 is duplicated to the duplication secondary path corresponding to the RLC entity. A manner of processing a data packet with the priority 2 is similar to that of processing the data packet with the priority 1. Details are not described herein again.

It should be noted that the foregoing examples (1) to (3) are all based on that a plurality of types of data for which a PDCP duplication state is configured exist in the plurality of types of data. When a type of data for which a PDCP duplication state is not configured exists in the plurality of types of data, the configuration information in (1) may include PDCP duplication state information of at least one type of data in the plurality of different types of data, for example, include the PDCP duplication state information of the data of the first type, but not include the PDCP duplication state information of the data of the second type for which a PDCP duplication state is not configured (for example, the pdcp-Duplication-lowPriority information element does not exist); the configuration information in (2) may include duplication secondary path activation state information of at least one type of data in the plurality of different types of data, for example, include the duplication secondary path activation state information of the data of the first type, but not include the duplication secondary path activation state information of the data of the second type for which a PDCP duplication state is not configured (for example, the duplicationState-Priority2 information element does not exist); and the configuration information in (3) may include indication information of a duplication secondary path and indication information #2 of at least one type of data in the plurality of different types of data, for example, include indication information of a duplication secondary path and indication information #2 of the data of the first type, but not include indication information of a duplication secondary path and indication information #2 of the data of the second type for which a PDCP duplication state is not configured (for example, the duplicationPath-Priority2 information element and the corresponding duplicationState information element do not exist).

In a dual connectivity (dual connectivity, DC) scenario, a primary station needs to notify a secondary station of the configuration information through an Xn interface between the primary station and the secondary station for configuration negotiation. Specifically, the configuration information may be carried in an inter-station RRC message (inter-node RRC message).

If a CU-DU separation architecture is used, a CU may notify a DU of the configuration information through an F1 interface between the CU and the DU, to notify a MAC entity on the DU of specific RLC entities corresponding to duplication secondary paths. Subsequently, the DU may also generate a MAC CE as required based on the configuration information, to indicate whether to activate duplication secondary paths of different types of data.

S202: For one type of data in the plurality of types of data, the terminal device activates or deactivates PDCP duplication and a duplication secondary path of the type of data based on the configuration information of the PDCP entity.

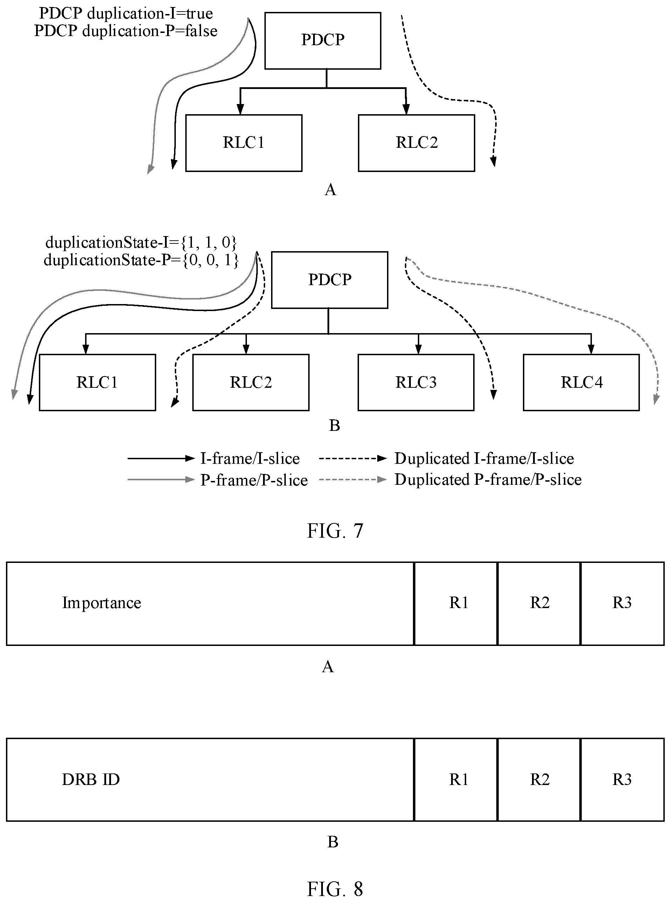

For example, at least PDCP duplication and a first duplication secondary path of the data of the first type are activated or deactivated. That at least PDCP duplication and the first duplication secondary path of the data of the first type are activated or deactivated means that in addition to PDCP duplication and the first duplication secondary path of the data of the first type, the terminal device may further activate or deactivate PDCP duplication and a second duplication secondary path of the data of the second type. If there are more types of data, the rest may be deduced by analogy. In an example, in data packet transmission paths shown in A in FIG. 7, when the configuration information includes PDCP duplication-I=true and PDCP duplication-P=false, an I-frame or I-slice data packet is transmitted on a primary path of PDCP-RLC1, and a P-frame or P-slice data packet is also transmitted on the primary path of PDCP-RLC1. When PDCP duplication of the I-frame or I-slice data packet is activated, a duplicated I-frame or I-slice data packet is transmitted on a duplication secondary path of PDCP-RLC2. In data packet transmission paths shown in B in FIG. 7, when the configuration information includes duplicationState-I={ 1, 1, 0} and duplicationState-P={0, 0, 1}, an I-frame or I-slice data packet is transmitted on a primary path of PDCP-RLC1, and a P-frame or P-slice data packet is also transmitted on the primary path of PDCP-RLC1. When 1^{st} and 2^{nd} duplication secondary paths of the I-frame or I-slice data packet are activated (correspondingly, values of 1^{st} and 2^{nd} bits of duplicationState-I are 1), duplicated I-frame or I-slice data packets are transmitted on duplication secondary paths of PDCP-RLC2 and PDCP-RLC3. When a 3^{rd} duplication secondary path of the P-frame or P-slice data packet is activated (correspondingly, a value of a 3^{rd} bit of duplicationState-P is 1), a duplicated P-frame or P-slice data packet is transmitted on a duplication secondary path of PDCP-RLC4. It may be understood that a plurality of bits of duplicationState all correspond to RLC entities of duplication secondary paths, and an RLC entity of the primary path is excluded. In addition, the plurality of bits may sequentially correspond to the RLC entities of the duplication secondary paths according to a predetermined order, for example, in left-to-right order in B in FIG. 7.

Correspondingly, when reporting a data volume to a MAC entity, the PDCP entity separately reports data volumes of different types of data to MAC entities in corresponding primary paths and MAC entities in corresponding duplication secondary paths. A data volume reported to the duplication secondary path needs to exclude a control PDU, that is, the data volume reported to the duplication secondary path does not include a size of a PDCP PDU used to transfer control plane information. In this way, the MAC entity may subsequently dynamically activate or deactivate a duplication secondary path of a corresponding type of data based on the data volume. Further, the MAC entity may report a buffer status report (buffer status report, BSR) to the network device based on the data volume, so that the network device schedules a resource.

Optionally, a configuration of PDCP duplication may also be dynamically activated and deactivated. Specifically, the network device may indicate, by using a media access control MAC CE, whether to activate duplication secondary paths of different types of data, or directly indicate activation states of duplication secondary paths of different types of data. FIG. 8 shows a possible form of a MAC CE. As shown in A in FIG. 8, importance (or a type) indicates a degree of importance or a type of data, and Ri (for example, R1 to R3 shown in the figure) indicates whether to activate duplication secondary paths corresponding to R1 to R3 for the data with the degree of importance. When a value of Ri is 1, it indicates to activate a duplication secondary path corresponding to Ri, that is, a duplicated data packet is transmitted to the duplication secondary path; and when the value of Ri is 0, it indicates to deactivate the duplication secondary path corresponding to Ri. As shown in B in FIG. 8, a DRB ID indicates a DRB for which the MAC CE is used, and Ri (for example, R1 to R3 shown in the figure) indicates whether to activate duplication secondary paths corresponding to R1 to R3. When a value of Ri is 1, it indicates to activate a duplication secondary path corresponding to Ri, that is, a duplicated data packet is transmitted to the duplication secondary path; and when the value of Ri is 0, it indicates to deactivate the duplication secondary path corresponding to Ri.

It may be understood that deactivation in embodiments of this application may be remaining in an inactive state, or changing from an active state to an inactive state.

Optionally, the network device may adjust, in the RRC signaling, configurations of PDCP duplication of different types of data, for example, delete a PDCP duplication state of a specific type of data, or change a duplication secondary path of a specific type.

It should be noted that a quantity of RLC entities associated with the PDCP entity is not limited in this embodiment of this application. When the PDCP entity is associated with more than two (for example, four) RLC entities, the RRC configuration and the MAC CE format need to be correspondingly extended.

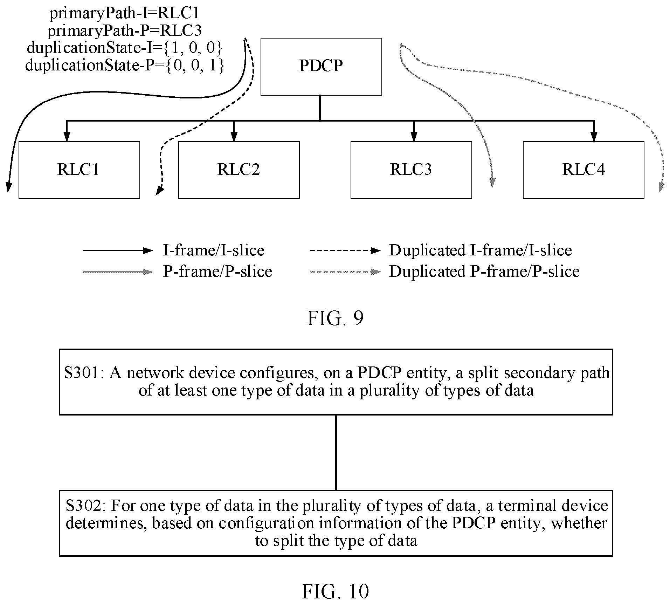

Further, the method shown in FIG. 6 may be further combined with the method shown in FIG. 3. To be specific, the configuration information may indicate a plurality of primary paths of a plurality of different types of data, and may also indicate a PDCP duplication state and a duplication secondary path of at least one type of data in the plurality of different types of data. In other words, one type of data corresponds to one primary path, and may also correspond to one PDCP duplication state and at least one duplication secondary path. FIG. 9 shows data packet transmission paths present when the two methods are combined. As shown in FIG. 9, an I-frame or I-slice data packet is transmitted on a primary path of PDCP-RLC1, and a P-frame or P-slice data packet is transmitted on a primary path of PDCP-RLC3. When a 1^{st} duplication secondary path of the I-frame or I-slice data packet is activated (correspondingly, a value of a 1^{st} bit of duplicationState-I is 1), a duplicated I-frame or I-slice data packet is transmitted on a duplication secondary path of PDCP-RLC2. When a 3^{rd} duplication secondary path of the P-frame or P-slice data packet is activated (correspondingly, a value of a 3^{rd} bit of duplicationState-P is 1), a duplicated P-frame or P-slice data packet is transmitted on a duplication secondary path of PDCP-RLC4.

In the method, when the PDCP entity is associated with the plurality of RLC entities, different PDCP duplication configurations, including PDCP duplication states and duplication secondary paths, are separately indicated for different types of data, to implement layered QoS. This can improve transmission reliability of data with high importance in the different types of data, and reduce radio resource consumption of data with low importance in the different types of data, thereby improving a system capacity. For example, the data with the high importance is duplicated or a quantity of duplication paths is increased for the data with the high importance, to improve transmission reliability of the data; and the data with the low importance is not duplicated or a quantity of duplication paths is reduced for the data with the low importance, to reduce resource consumption. For another example, the data with the high importance is duplicated to a path with better channel quality for transmission, to improve reliability of the data; and the data with the low importance may be duplicated to a path with worse channel quality for transmission, to relieve resource pressure.

Further, the method may be combined with the method shown in FIG. 3, to indicate different primary paths and PDCP duplication configurations for data with different importance. For example, data with high importance is transmitted on a path with better channel quality, and the data is duplicated for transmission, to improve transmission reliability; and data with low importance may be transmitted on a path with worse channel quality, and the data does not need to be duplicated, to reduce resource consumption and relieve resource pressure.

In addition to the methods shown in FIG. 3 and FIG. 6, FIG. 10 shows still another data transmission method according to an embodiment of this application. The method is used to perform differentiated processing on different types of data carried on a same DRB. The method includes the following steps.

S301: When one PDCP entity of the DRB is associated with a plurality of RLC entities, and these RLC entities correspond to two different MAC entities, the DRB is referred to as a split bearer (split DRB). A network device configures, on the PDCP entity, a split secondary path (split secondary path) of at least one type of data in a plurality of types of data for the split DRB.

That the network device configures, on the PDCP entity, the split secondary path of the at least one type of data may include: The network device determines configuration information of the PDCP entity, and sends the configuration information to a terminal device. Correspondingly, the terminal device receives the configuration information of the PDCP entity from the network device. The configuration information indicates the split secondary path that is of the at least one type of data corresponding to the PDCP entity and that is configured by the network device for the terminal device. In other words, the configuration information includes information about split secondary paths of one or more types of data, the configuration information includes indication information of split secondary paths of one or more types of data, or the configuration information includes configuration information of split secondary paths of one or more types of data.

In an example, the network device may configure a plurality of split secondary paths for the DRB by using RRC signaling.

The configuration information indicates the split secondary path of the at least one type of data in the plurality of types of data. When splitting is configured for one type of data, the type of data corresponds to at least one split secondary path. When splitting is not configured for one type of data, the type of data may be transmitted on a primary path, splitting is not performed, and no split secondary path exists. The split secondary path is a path for transmitting a split data packet during data splitting. One split secondary path may include one PDCP entity, one RLC entity, and one MAC entity, and transmission is performed between the RLC entity and the MAC entity on a logical channel.

Further, the network device configures, on the PDCP entity, a split threshold of the at least one type of data in the plurality of types of data for the split DRB, that is, the configuration information includes the split threshold of the at least one type of data. One type of data corresponds to one split threshold, to be specific, when a data volume of one type of data reaches a split threshold corresponding to the type, the type of data is split. Alternatively, a plurality of types of data correspond to one general split threshold, to be specific, when a data volume of the plurality of types of data reaches the general split threshold, the plurality of types of data is split. The split threshold is a data volume threshold for determining whether to perform data splitting.

The configuration information is used to configure, for a PDCP entity of the terminal device, a parameter related to the PDCP entity, for example, a PDCP configuration information element (for example, PDCP-Config). When the PDCP entity is associated with more than one RLC entity, the PDCP configuration information element may include indication information of a primary path and a split threshold. The indication information of the primary path and the split threshold may be, for example, the following primary Path information element (or field) and ul-DataSplitThreshold information element respectively:

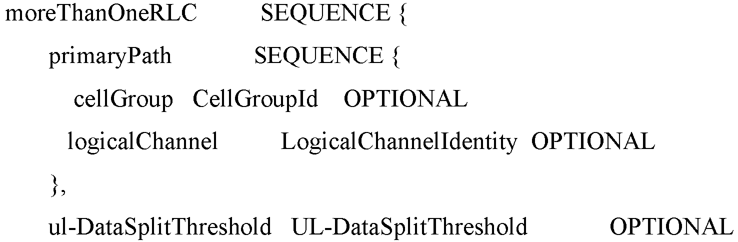

When the PDCP entity is associated with more than two RLC entities, the PDCP configuration information element may further include indication information of a split secondary path, for example, the following splitSecondaryPath information element:

```
moreThanTwoRLC-DRB SEQUENCE {
    splitSecondaryPath LogicalChannelIdentity
     ...
     }
```

For the primary Path information element, refer to related descriptions in FIG. 3. Details are not described herein again. The ul-DataSplitThreshold information element indicates to deliver, after performing splitting after a data volume reaches a threshold, data to another RLC entity different from an RLC entity indicated by the primary Path information element. When the PDCP entity is associated with two RLC entities, the another RLC entity is an RLC entity other than the RLC entity indicated by the primary Path information element. When the PDCP entity is associated with more than two RLC entities, the another RLC entity corresponds to an LCH ID indicated by the splitSecondaryPath information element.

The following describes possible forms of the configuration information in this embodiment of this application by using several examples.
(1) When the PDCP entity of the DRB is associated with two RLC entities, the configuration information may include a plurality of split thresholds of a plurality of different types of data, for example, include a split threshold of data of a first type and a split threshold of data of a second type.

For example, if the PDCP entity of the DRB is associated with a first RLC entity and a second RLC entity, a primary path of the data of the first type corresponds to the first RLC entity, and the split threshold is a value 1, the terminal device may determine, based on a data volume of the data of the first type and the value 1, whether to deliver data of the first type to a split secondary path after splitting. Specifically, when the data volume of the data of the first type reaches the value 1, the terminal device may deliver data of the first type to the split secondary path after splitting; and when the data volume of the data of the first type does not reach the value 1, the terminal device may transmit the data of the first type on the primary path. The split secondary path of the data of the first type corresponds to an RLC entity other than the first RLC entity corresponding to the primary path, that is, the second RLC entity. If a primary path of the data of the second type corresponds to the second RLC entity, and the split threshold is a value 2, the terminal device may determine, based on a data volume of the data of the second type and the value 2, whether to deliver data of the second type to a split secondary path after splitting. Specifically, when the data volume of the data of the second type reaches the value 2, the terminal device may deliver data of the second type to the split secondary path after splitting; and when the data volume of the data of the second type does not reach the value 2, the terminal device may transmit the data of the second type on the primary path. The split secondary path of the data of the second type corresponds to an RLC entity other than the second RLC entity corresponding to the primary path, that is, the first RLC entity. The split threshold that may have a plurality of values may be a field of an enumeration type or an integer type. For how to determine primary paths of different types of data, refer to the method shown in FIG. 3 or an existing method.

It may be understood that, when the PDCP entity of the DRB is associated with two RLC entities, the configuration information may include the plurality of split thresholds of the plurality of different types of data. The terminal device can determine, based on the plurality of split thresholds, whether to split the plurality of different types of data, and then determine a split secondary path of a specific type of data based on a primary path of the type of data. Therefore, in this case, the configuration information may be understood as indicating a plurality of split secondary paths and the plurality of split thresholds of the plurality of types of data.

In an example, the configuration information may include the following information elements:

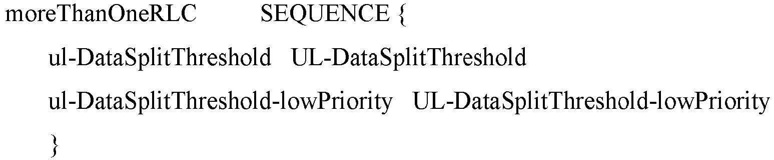

In this example, when the ul-DataSplitThreshold-lowPriority information element exists, it indicates that a split threshold is independently configured for low-priority data. The PDCP entity determines, based on a data volume of the low-priority data and a value of the information element, whether to split the low-priority data. When the ul-DataSplitThreshold-lowPriority exists, the ul-DataSplitThreshold field indicates a split threshold of high-priority data. The PDCP entity determines, based on a data volume of the high-priority data and a value of the information element, whether to split the high-priority data.

(2) When the PDCP entity of the DRB is associated with at least two RLC entities, the configuration information may include a plurality of pieces of indication information of a split secondary path of a plurality of different types of data and a general split threshold. The configuration information includes, for example, indication information of a split secondary path of data of a first type, indication information of a split secondary path of data of a second type, and a general split threshold.

The indication information of the split secondary path indicates at least one split secondary path. Indication information of a split secondary path of one type of data may be one or more LCH IDs. When a data volume of the data of the first type and the data of the second type reaches the general split threshold, the terminal device delivers data of the first type to the split secondary path of the data of the first type after splitting, and delivers data of the second type to the split secondary path of the data of the second type after splitting.

In an example, the configuration information may include the following information elements:

```
 moreThanTwoRLC-DRB SEQUENCE {
    split Secondary Path-Priority 1 LogicalChannelIdentity
    splitSecondaryPath-Priority2 LogicalChannelIdentity
     }
```

splitSecondaryPath-Priority1 is indication information of a split secondary path of data with a priority 1, and indicates the split secondary path of the data with the priority 1; and splitSecondaryPath-Priority2 is indication information of a split secondary path of data with a priority 2, and indicates the split secondary path of the data with the priority 1. When a total data volume of the data with the priority 1 and the data with the priority 2 reaches a total split threshold (for example, a value indicated by a ul-DataSplitThreshold field), a data packet with the priority 1 is delivered to the secondary path corresponding to splitSecondaryPath-Priority1 after splitting, and a data packet with the priority 2 is delivered to the secondary path corresponding to splitSecondaryPath-Priority2 after splitting. If there are more types of data, the rest may be deduced by analogy.

Alternatively, the configuration information includes the following information elements:

```
 moreThanTwoRLC-DRB SEQUENCE {
    splitSecondaryPath LogicalChannelIdentity
    splitSecondaryPath-Priority2 LogicalChannelIdentity
     }
```

By default, the splitSecondaryPath information element is indication information of a split secondary path of data with a priority 1, and indicates the split secondary path of the data with the priority 1; and splitSecondaryPath-Priority2 is indication information of a split secondary path of data with a priority 2, and indicates the split secondary path of the data with the priority 2. When the splitSecondaryPath information element and the splitSecondaryPath-Priority2 information element exist, and a data volume of the data with the priority 1 and the data with the priority 2 reaches a general split threshold, a data packet with the priority 1 is delivered to the split secondary path indicated by splitSecondaryPath after splitting, and a data packet with the priority 2 is delivered to the split secondary path indicated by duplicationState-Priority2 after splitting. If there are more types of data, the rest may be deduced by analogy. For the priority, refer to related descriptions in FIG. 3. Details are not described herein again.

(3) When the PDCP entity of the DRB is associated with at least two RLC entities, the configuration information may include a plurality of pieces of indication information of a split secondary path of a plurality of different types of data and a plurality of split thresholds. For example, the configuration information includes indication information of a split secondary path and a split threshold of data of a first type, and indication information of a split secondary path and a split threshold of data of a second type.

The indication information of the split secondary path indicates at least one split secondary path. Indication information of a split secondary path of one type of data may be one or more LCH IDs. When a data volume of the data of the first type reaches the split threshold of the data of the first type, the terminal device delivers data of the first type to the secondary path of the first type after splitting; and when a data volume of the data of the second type reaches the split threshold of the data of the second type, the terminal device delivers the data of the second type to the secondary path of the second type after splitting.

In an example, the configuration information may include the following information elements:

```
 moreThanTwoRLC-DRB SEQUENCE {
    split Secondary Path-Priority 1 LogicalChannelIdentity
    splitSecondaryPath-Priority2 LogicalChannelIdentity
     }
 moreThanOneRLC SEQUENCE {
    ul-DataSplitThreshold-Priority1 UL-DataSplitThreshold
    ul-DataSplitThreshold-Priority2 UL-DataSplitThreshold-lowPriority
     }
```

splitSecondaryPath-Priority1 is indication information of a split secondary path of data with a priority 1, and indicates the split secondary path of the data with the priority 1; ul-DataSplitThreshold-Priority1 is a split threshold of the data with the priority 1; splitSecondaryPath-Priority2 is indication information of a split secondary path of data with a priority 2, and indicates the split secondary path of the data with the priority 1; and ul-DataSplitThreshold-Priority2 is a split threshold of the data with the priority 2. When a data volume of the data with the priority 1 reaches a value indicated by ul-DataSplitThreshold-Priority1, a data packet with the priority 1 is delivered to the secondary path corresponding to splitSecondaryPath-Priority1 after splitting; and when a data volume of the data with the priority 2 reaches a value indicated by ul-DataSplitThreshold-Priority2, a data packet with the priority 2 is delivered to the secondary path corresponding to splitSecondaryPath-Priority2 after splitting. If there are more types of data, the rest may be deduced by analogy.

It should be noted that the foregoing examples (1) to (3) are all based on that a plurality of types of data for which splitting is configured exist in the plurality of types of data. When a type of data for which splitting is not configured exists in the plurality of types of data, the configuration information in (1) may include a split threshold of at least one type of data in the plurality of different types of data, for example, include the split threshold of the data of the first type, but not include the split threshold of the data of the second type for which splitting is not configured (for example, the ul-DataSplitThreshold-lowPriority information element does not exist); and the configuration information in (3) may include indication information of a split secondary path and a split threshold of at least one type of data in the plurality of different types of data, for example, include the indication information of the split secondary path and the split threshold of the data of the first type, but not include indication information of the split secondary path and the split threshold of the data of the second type for which splitting is not configured (for example, the splitSecondaryPath-Priority2 information element and the ul-DataSplitThreshold-Priority2 information element do not exist).

In a DC scenario, a primary station needs to notify a secondary station of the configuration information through an Xn interface for configuration negotiation. Specifically, the configuration information may be carried in an inter-node RRC message.

S302: For one type of data in the plurality of types of data, the terminal device determines, based on the configuration information of the PDCP entity, whether to split the type of data.

For example, at least data of the first type is delivered to a first split secondary path after splitting. That at least the data of the first type is delivered to the first split secondary path after splitting means that in addition to delivering the data of the first type after splitting, the terminal device may further deliver data of the second type to a second split secondary path after splitting. If there are more types of data, the rest may be deduced by analogy.

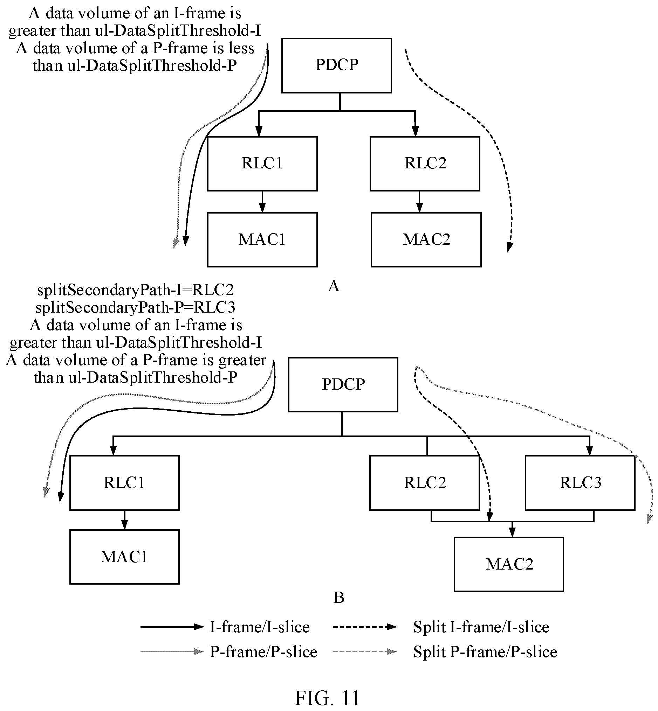

In an example, in data packet transmission paths shown in A in FIG. 11, an I-frame or I-slice data packet is transmitted on a primary path of PDCP-RLC1-MAC1, and a P-frame or P-slice data packet is also transmitted on the primary path of PDCP-RLC1-MAC1. When a data volume of I-frame or I-slice data packets reaches ul-DataSplitThreshold-I, a split I-frame or I-slice data packet is transmitted on a secondary path of PDCP-RLC2-MAC2. In data packet transmission paths shown in B in FIG. 11, an I-frame or I-slice data packet is transmitted on a primary path of PDCP-RLC1-MAC1, and a P-frame or P-slice data packet is also transmitted on the primary path of PDCP-RLC1-MAC1. When a data volume of I-frame or I-slice data packets reaches ul-DataSplitThreshold-I, a split I-frame or I-slice data packet is transmitted on a secondary path of PDCP-RLC2-MAC2. When a data volume of P-frame or P-slice data packets reaches ul-DataSplitThreshold-P, a split P-frame or P-slice data packet is transmitted on a secondary path of PDCP-RLC3-MAC2.

Optionally, when a split secondary path is configured for a specific type of data, and a data volume of the type of data reaches a corresponding split threshold, the terminal device delivers a part of data packets of the type to a primary path of the type, and delivers the other part of data packets to the configured split secondary path. When it is determined whether the data volume is greater than the split threshold, the data volume includes a data volume on the PDCP entity and a volume of data that is on RLC entities corresponding to the primary path and the secondary path and that waits for initial transmission. Correspondingly, when reporting a data volume to a MAC entity, the PDCP entity separately reports data volumes of different types of data to MAC entities in corresponding primary paths and MAC entities in corresponding split secondary paths. In this way, the MAC entity may subsequently dynamically activate or deactivate a duplication secondary path of a corresponding type of data based on the data volume. Further, the MAC entity may report a buffer status report (buffer status report, BSR) to the network device based on the data volume, so that the network device schedules a resource.

Optionally, the network device may adjust, in the RRC signaling, configurations of splitting of different types of data, for example, delete a split secondary path of a specific type of data, or change a split threshold of a specific type.

It should be noted that a quantity of RLC entities associated with the PDCP entity is not limited in this embodiment of this application. When the PDCP entity is associated with more than two (for example, four) RLC entities, the RRC configuration needs to be correspondingly extended.

Further, the method shown in FIG. 10 may be combined with the method shown in FIG. 3. To be specific, primary paths may be separately configured for different types of data, and splitting is separately performed on respective secondary paths. Correspondingly, the configuration information may indicate a plurality of primary paths of a plurality of different types of data, and may also indicate a split secondary path of at least one type of data in the plurality of different types of data (optionally, may further indicate a split threshold). One type of data corresponds to one primary path, and may also correspond to at least one split secondary path (optionally, may further correspond to one split threshold).

Alternatively, the method shown in FIG. 10 may be further combined with the method shown in FIG. 6. To be specific, PDCP duplication or splitting may be separately performed on different types of data. Correspondingly, the configuration information may indicate a PDCP duplication state and a duplication secondary path of at least one type of data in a plurality of different types of data, and may also indicate a split secondary path of the at least one type of data (optionally, may further indicate a split threshold). One type of data may correspond to one PDCP duplication state and at least one duplication secondary path, and may also correspond to at least one split secondary path (optionally, may further correspond to one split threshold).

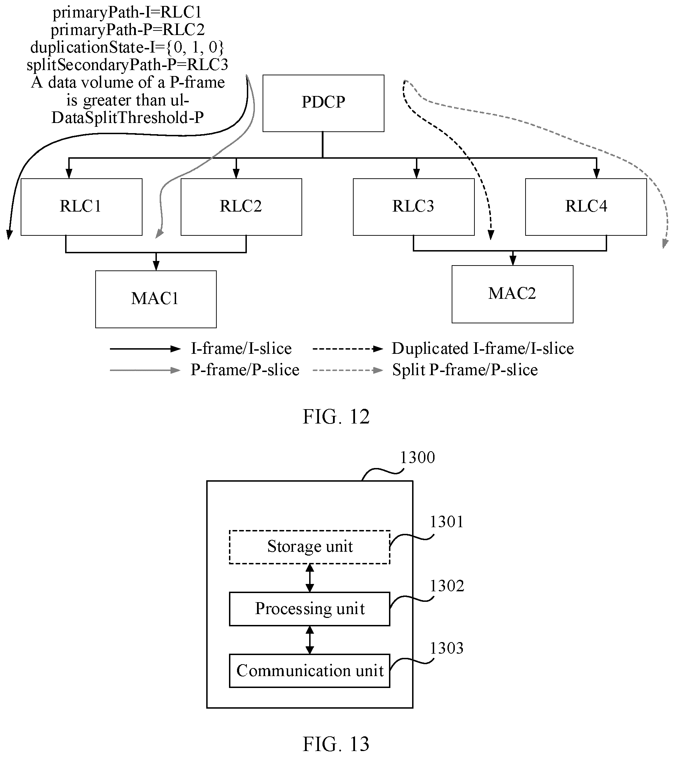

Alternatively, the method shown in FIG. 10 may be further combined with the methods shown in FIG. 6 and FIG. 3. To be specific, primary paths may be separately configured for different types of data, and PDCP duplication or splitting may be separately performed on respective secondary paths. Correspondingly, the configuration information may indicate a plurality of primary paths of a plurality of different types of data, may also indicate a PDCP duplication state and a duplication secondary path of at least one type of data in the plurality of different types of data, and may also indicate a split secondary path of the at least one type of data in the plurality of different types of data (optionally, may further indicate a split threshold). One type of data corresponds to one primary path, may correspond to one PDCP duplication state and at least one duplication secondary path, and may correspond to at least one split secondary path (optionally, may further correspond to one split threshold). FIG. 12 shows data packet transmission paths present when the three methods are combined. As shown in FIG. 12, an I-frame or I-slice data packet is transmitted on a primary path of PDCP-RLC1-MAC1, and a P-frame or P-slice data packet is transmitted on a primary path of PDCP-RLC2-MAC1. When a 2^{nd} duplication secondary path of the I-frame or I-slice data packet is activated (correspondingly, a value of a 2^{nd} bit of duplicationState-I is 1), a duplicated I-frame or I-slice data packet is transmitted on a duplication secondary path of PDCP-RLC3-MAC2. When P-frame or P-slice data packets are split, a split P-frame ore P-slice data packet is transmitted on a split secondary path of PDCP-RLC4-MAC2.

In the method, when the PDCP entity is associated with the plurality of RLC entities, and the RLC entities are associated with the two different MAC entities, different splitting configurations, including split secondary paths and split thresholds, are separately indicated for different types of data, so that different data has different splitting policies, and layered QoS is implemented. This can improve transmission reliability of data with high importance in the different types of data, and reduce radio resource consumption of data with low importance in the different types of data, thereby improving a system capacity. For example, a lower split threshold is configured for the data with the high importance, so that when a volume of the data with the high importance is large, the data is easily split and is transmitted on both a primary path and a split secondary path, to increase a transmission rate and reduce a delay; and a higher split threshold may be configured for the data with the low importance, so that the data is not easily split and is transmitted only on a primary path, to reduce resource consumption. For another example, a split secondary path with better channel quality is configured for the data with the high importance, to increase a transmission rate and improve reliability; and a split secondary path with worse channel quality may be used for the data with the low importance, to relieve resource pressure.

Further, the method may be combined with the method shown in FIG. 3 and the method shown in FIG. 6, to indicate different primary paths and respective PDCP duplication configurations or splitting configurations for data with different degrees of importance. For example, data with high importance is transmitted on a path with better channel quality, and the data is duplicated for transmission, to improve reliability of the data; and data with low importance but a large data volume may be transmitted on a path with worse channel quality, and the data is split, to improve a transmission rate.

The foregoing mainly describes the solutions provided in embodiments of this application from a perspective of interaction between apparatuses. It may be understood that, to implement the foregoing functions, the terminal device or the network device may include corresponding hardware structures and/or software modules for performing the functions. A person skilled in the art should easily be aware that, in combination with units and algorithm steps of the examples described in embodiments of this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

FIG. 13 is a possible example block diagram of an apparatus according to an embodiment of this application. As shown in FIG. 13, the apparatus 1300 may include a processing unit 1302 and a communication unit 1303. The processing unit 1302 is configured to control and manage an action of the apparatus 1300. The communication unit 1303 is configured to support communication between the apparatus 1300 and another device. Optionally, the communication unit 1303 is also referred to as a transceiver unit, and may include a receiving unit and/or a sending unit. The receiving unit and the sending unit are respectively configured to perform a receiving operation and a sending operation. The apparatus 1300 may further include a storage unit 1301, configured to store program code and/or data of the apparatus 1300.

The apparatus 1300 may be the terminal device in the foregoing embodiment, or may be a component (for example, a chip or a circuit) in the terminal device. The processing unit 1302 may support the apparatus 1300 in performing actions of the terminal device in the foregoing method examples. Alternatively, the processing unit 1302 mainly performs internal actions of the terminal device in the method examples, and the communication unit 1303 may support communication between the apparatus 1300 and another device.

For example, in an embodiment, the communication unit 1303 is configured to receive, from a network device, configuration information for one packet data convergence protocol PDCP entity, where the configuration information indicates a plurality of primary paths of a plurality of types of data, and one type of data corresponds to one primary path. The processing unit 1302 is configured to transmit, through the communication unit 1303, at least a first data packet on a first primary path based on the configuration information, where the first primary path is a primary path that is in the plurality of primary paths and that corresponds to a first type of the first data packet.

The apparatus 1300 may be the network device in the foregoing embodiment, or may be a component (for example, a chip or a circuit) in the network device. The processing unit 1302 may support the apparatus 1300 in performing actions of the network device in the foregoing method examples. Alternatively, the processing unit 1302 mainly performs internal actions of the network device in the method examples, and the communication unit 1303 may support communication between the apparatus 1300 and another device.

For example, in an embodiment, the processing unit 1302 is configured to determine configuration information for one packet data convergence protocol PDCP entity, where the configuration information indicates a plurality of primary paths of a plurality of types of data, and one type of data corresponds to one primary path. The communication unit 1303 is configured to send the configuration information to a terminal device.

It should be understood that division into the units of the foregoing apparatus is merely logical function division. During actual implementation, some or all units may be integrated into one physical entity, or the units may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element, or may be implemented in a form of software invoked by a processing element.

In an example, a unit in any one of the foregoing apparatuses may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these types of integrated circuits. For another example, when the units in the apparatus are implemented in a form of scheduling a program by a processing element, the processing element may be a processor, for example, a general-purpose central processing unit (central processing unit, CPU) or another processor that can invoke the program. For another example, these units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

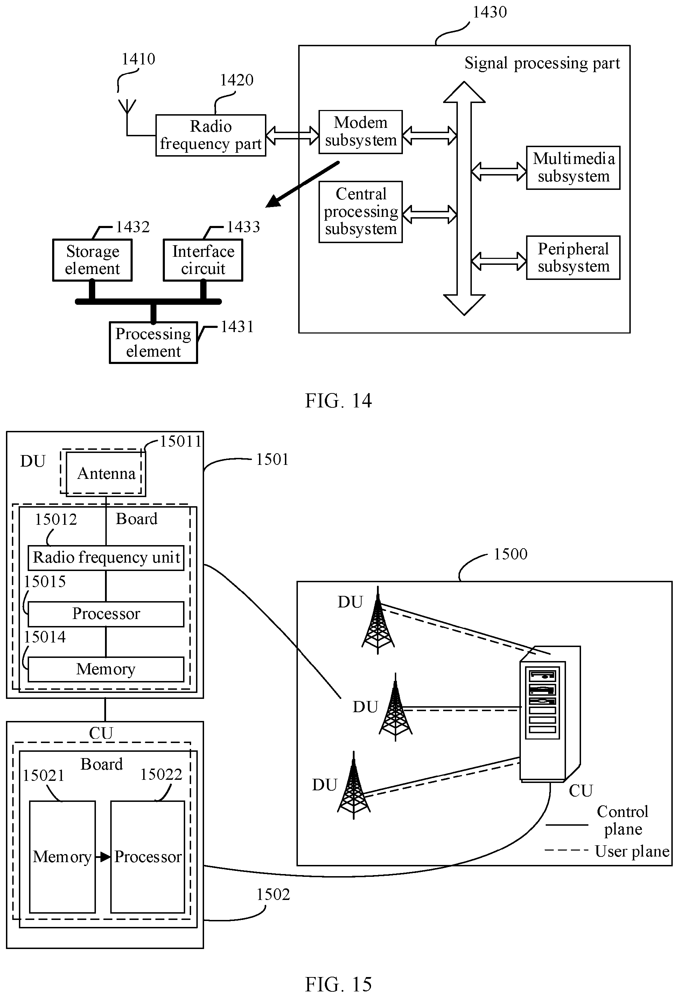

FIG. 14 is a diagram of a structure of a terminal device according to an embodiment of this application. The terminal device may be used in the communication system shown in FIG. 1, and is configured to implement operations of the terminal device in the foregoing embodiments. As shown in FIG. 14, the terminal device includes: an antenna 1410, a radio frequency part 1420, and a signal processing part 1430. The antenna 1410 is connected to the radio frequency part 1420. In a downlink direction, the radio frequency part 1420 receives, through the antenna 1410, information sent by a network device, and sends the information sent by the network device to the signal processing part 1430 for processing. In an uplink direction, the signal processing part 1430 processes information of the terminal device, and sends processed information to the radio frequency part 1420. The radio frequency part 1420 processes the information of the terminal device, and then sends processed information to the network device through the antenna 1410.

The signal processing part 1430 may include a modem subsystem, configured to implement processing on each communication protocol layer of data; and may further include a central processing subsystem, configured to implement processing on an operating system and an application layer of the terminal device. In addition, other subsystems may be further included, for example, a multimedia subsystem and a peripheral subsystem. The multimedia subsystem is configured to control a camera, screen display, and the like of the terminal device, and the peripheral subsystem is configured to connect to another device. The modem subsystem may be a separately disposed chip.

The modem subsystem may include one or more processing elements 1431, for example, include a main control CPU and another integrated circuit. In addition, the modem subsystem may further include a storage element 1432 and an interface circuit 1433. The storage element 1432 is configured to store data and a program. However, a program used to perform the method performed by the terminal device in the foregoing methods may not be stored in the storage element 1432, but is stored in a memory outside the modem subsystem, and is loaded by the modem subsystem during use. The interface circuit 1433 is configured to communicate with another subsystem.

The modem subsystem may be implemented by a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing method may be implemented in a form of a program scheduled by a processing element. For example, the apparatus used in the terminal device includes a processing element and a storage element. The processing element invokes a program stored in the storage element, to perform the method performed by the terminal device in the foregoing method embodiments. The storage element may be a storage element that is located on a same chip as the processing element, that is, an on-chip storage element.

In another implementation, the program used to perform the method performed by the terminal device in the foregoing methods may be in a storage element located on a different chip from the processing element, that is, an off-chip storage element. In this case, the processing element invokes or loads the program from the off-chip storage element to an on-chip storage element, to invoke and perform the method performed by the terminal device in the foregoing method embodiments.

In still another implementation, units of the terminal device that implement the steps in the foregoing method may be configured as one or more processing elements. These processing elements are disposed in the modem subsystem. The processing element herein may be an integrated circuit, for example, one or more ASICs, one or more DSPs, one or more FPGAs, or a combination of these types of integrated circuits. These integrated circuits may be integrated together to form a chip.

The units of the terminal device that implement the steps in the foregoing method may be integrated together, and implemented in a form of a SoC. The SoC is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented in a form of a program invoked by a processing element, and functions of some units may be implemented in a form of an integrated circuit.

It can be learned that the foregoing apparatus used in the terminal device may include at least one processing element and an interface circuit. The at least one processing element is configured to perform any method performed by the terminal device in the foregoing method embodiments. The processing element may perform, in a first manner, some or all steps performed by the terminal device, to be specific, by invoking the program stored in the storage element; or may perform, in a second manner, some or all steps performed by the terminal device, to be specific, by using a hardware integrated logic circuit in the processor element in combination with instructions; or certainly, may perform, through a combination of the first manner and the second manner, some or all steps performed by the terminal device.

The processing element herein is the same as that described above, and may be implemented by a processor. A function of the processing element may be the same as a function of the processing unit described in FIG. 13. For example, the processing element may be a general-purpose processor, for example, a CPU; or may be one or more integrated circuits configured to implement the foregoing method, for example, one or more ASICs, one or more microprocessors DSPs, one or more FPGAs, or a combination of at least two of these types of integrated circuits. The storage element may be implemented by a memory. A function of the storage element may be the same as a function of the storage unit described in FIG. 13. The storage element may be a memory, or may be a general term of a plurality of memories.

The terminal device shown in FIG. 14 can implement processes related to the terminal device in the foregoing method embodiments. Operations and/or functions of modules in the terminal device shown in FIG. 14 are separately used to implement corresponding procedures in the method embodiments. For details, refer to the descriptions in the foregoing method embodiments. To avoid repetition, detailed descriptions are properly omitted herein.

FIG. 15 is a diagram of a structure of a network device according to an embodiment of this application. The network device (or a base station) may be used in the communication system shown in FIG. 1, to perform functions of the network device in the foregoing method embodiments. As shown in FIG. 15, the network device 1500 may include one or more DUs 1501 and one or more CUs 1502. The DU 1501 may include at least one antenna 15011, at least one radio frequency unit 15012, at least one processor 15015, and at least one memory 15014. The DU 1501 is mainly configured to: send and receive radio frequency signals, perform conversion between the radio frequency signal and a baseband signal, and perform partial baseband processing. The CU 1502 may include at least one processor 15022 and at least one memory 15021.

The CU 1502 is mainly configured to: perform baseband processing, control the network device, and so on. The DU 1501 and the CU 1502 may be physically disposed together, or may be physically disposed separately, namely, in a distributed base station. The CU 1502 is a control center of the network device, may also be referred to as a processing unit, and is mainly configured to complete a baseband processing function. For example, the CU 1502 may be configured to control the network device to perform an operation procedure related to the network device in the foregoing method embodiments.

In addition, optionally, the network device 1500 may include one or more radio frequency units, one or more DUs, and one or more CUs. The DU may include at least one processor 15015 and at least one memory 15014, the radio frequency unit may include at least one antenna 15011 and at least one radio frequency unit 15012, and the CU may include at least one processor 15022 and at least one memory 15021.

In an example, the CU 1502 may include one or more boards, and a plurality of boards may jointly support a radio access network (for example, a 5G network) of a single access standard, or may separately support radio access networks (such as an LTE network, a 5G network, or another network) of different access standards. The memory 15021 and the processor 15022 may serve one or more boards. In other words, a memory and a processor may be separately disposed on each board. Alternatively, a plurality of boards may share a same memory and a same processor. In addition, a necessary circuit may be further disposed on each board. The DU 1501 may include one or more boards, and a plurality of boards may jointly support a radio access network (for example, a 5G network) of a single access standard, or may separately support radio access networks (such as an LTE network, a 5G network, or another network) of different access standards. The memory 15014 and the processor 15015 may serve one or more boards. In other words, a memory and a processor may be separately disposed on each board. Alternatively, a plurality of boards may share a same memory and a same processor. In addition, a necessary circuit may be further disposed on each board.

The network device shown in FIG. 15 can implement processes related to the network device in the foregoing method embodiments. Operations and/or functions of modules in the network device shown in FIG. 15 are separately used to implement corresponding procedures in the method embodiments. For details, refer to the descriptions in the foregoing method embodiments. To avoid repetition, detailed descriptions are properly omitted herein.

It may be understood that the terminal device in embodiments of this application may include a processor and a memory, and the memory may store a necessary computer program or instructions. The processor may execute the computer program or the instructions stored in the memory. When the computer program or the instructions are executed, the terminal device can perform the foregoing method embodiment. The network device in embodiments of this application may include a processor and a memory, and the memory may store a necessary computer program or instructions. The processor may execute the computer program or the instructions stored in the memory. When the computer program or the instructions are executed, the network device can perform the foregoing method embodiment. An embodiment of this application further provides a communication system, including at least the terminal device and the network device in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product in this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

It should be noted that, in the specification, claims, and accompanying drawings of this application, terms such as "first" and "second" are merely intended to distinguish between different objects, but do not indicate a particular order. In addition, terms "include" and "have" and any other variants thereof are intended to cover a non-exclusive inclusion. For example, a process, method, system, product, device, or the like that includes a series of steps or units is not limited to the listed steps or units, but optionally further includes an unlisted step, unit, or the like, or optionally further includes another inherent step or unit of the process, method, product, device, or the like.

"An embodiment" mentioned in the specification indicates that a particular characteristic, structure, or feature described with reference to this embodiment may be included in at least one embodiment of this application. The phrase appearing in various locations in the specification does not necessarily mean a same embodiment, and neither means an independent or alternative embodiment mutually exclusive with another embodiment. It may be explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. Certainly, when A and B are not mutually exclusive, "or" may indicate that three relationships exist, for example, only A exists, only B exists, and both A and B exist. The character "/" generally indicates an "or" relationship between associated objects. "At least one of the following items (pieces)" or a similar expression thereof means any combination of these items. For example, at least one of a, b, or c may indicate: a, b, c, "a and b", "a and c", "b and c", or "a, b, and c".

## Claims

1. A data transmission method, comprising:
receiving, from a network device, configuration information for one packet data convergence protocol PDCP entity, wherein the configuration information indicates a plurality of primary paths of a plurality of types of data, and one type of data corresponds to one primary path; and
transmitting, based on the configuration information, at least a first data packet on a first primary path, wherein the first primary path is a primary path that is in the plurality of primary paths and that corresponds to a first type of the first data packet.

2. The method according to claim 1, wherein the configuration information comprises indication information of a primary path of at least one type of data in the plurality of types of data.

3. The method according to claim 1 or 2, wherein the method further comprises:
sending a data volume of the first primary path to a media access control MAC entity corresponding to the first primary path.

4. The method according to any one of claims 1 to 3, wherein the method further comprises:
receiving a first activation indication from the network device, wherein the first activation indication indicates to activate or deactivate at least one of the plurality of primary paths.

5. The method according to any one of claims 1 to 4, wherein the configuration information further indicates a PDCP duplication state and a duplication secondary path of at least data of the first type in the plurality of types of data, and the duplication secondary path is used to transmit a duplicated data packet; and
the method further comprises: activating or deactivating PDCP duplication and a duplication secondary path of the data of the first type based on the configuration information.

6. The method according to claim 5, wherein the configuration information comprises PDCP duplication state information of at least the data of the first type in the plurality of types of data, and the PDCP duplication state information indicates whether to activate PDCP duplication.

7. The method according to claim 5 or 6, wherein the configuration information comprises duplication secondary path activation state information of at least the data of the first type in the plurality of types of data, and the duplication secondary path activation state information indicates whether to activate or deactivate the duplication secondary path of the data of the first type.

8. The method according to any one of claims 5 to 7, wherein the configuration information comprises indication information of the duplication secondary path of at least the data of the first type in the plurality of types of data and indication information indicating whether to activate a specific duplication secondary path.

9. The method according to any one of claims 5 to 8, wherein the method further comprises:
reporting a data volume of a first duplication secondary path of the data of the first type to a MAC entity corresponding to the first duplication secondary path.

10. The method according to any one of claims 5 to 9, wherein the method further comprises:
receiving a second activation indication from the network device, wherein the second activation indication indicates to activate the duplication secondary path of the data of the first type, or indicates to deactivate the duplication secondary path of the data of the first type.

11. The method according to any one of claims 1 to 10, wherein the PDCP entity is associated with one split radio access bearer split DRB, the configuration information further indicates a split secondary path of at least the data of the first type, and the split secondary path is used to transmit a split data packet; and
the method further comprises: determining, based on the configuration information, whether to split a data packet of the first type.

12. The method according to claim 11, wherein the configuration information comprises indication information of the split secondary path of at least the data of the first type in the plurality of types of data.

13. The method according to claim 11 or 12, wherein the configuration information comprises a split threshold of at least one type of data in the plurality of types of data, and one type of data corresponds to one split threshold; or the configuration information comprises a general split threshold of the plurality of types of data, and the plurality of types of data correspond to one general split threshold, wherein the split threshold is used to determine whether to split corresponding data.

14. The method according to any one of claims 11 to 13, wherein the method further comprises:
reporting a data volume of a first split secondary path of the data of the first type to a MAC entity corresponding to the first split secondary path.

15. The method according to any one of claims 1 to 14, wherein the method further comprises:
determining a type of the data packet based on information in the data packet; or
determining a type of the data packet according to an indication of a core network or an application layer.

16. The method according to any one of claims 1 to 15, wherein the plurality of types of data comprise data of an I-frame using intra-frame coding and data of a P-frame using predictive coding.

17. A data transmission method, comprising:
determining configuration information for one packet data convergence protocol PDCP entity, wherein the configuration information indicates a plurality of primary paths of a plurality of types of data, and one type of data corresponds to one primary path; and
sending the configuration information to a terminal device.

18. The method according to claim 17, wherein the configuration information comprises indication information of a primary path of at least one type of data in the plurality of types of data.

19. The method according to claim 17 or 18, wherein the method further comprises:
sending a first activation indication to the terminal device, wherein the first activation indication indicates to activate or deactivate at least one of the plurality of primary paths.

20. The method according to any one of claims 17 to 19, wherein the configuration information further indicates a PDCP duplication state and a duplication secondary path of at least data of a first type in the plurality of types of data, and the duplication secondary path is used to transmit a duplicated data packet.

21. The method according to claim 20, wherein the configuration information comprises PDCP duplication state information of at least the data of the first type in the plurality of types of data, and the PDCP duplication state information indicates whether to activate PDCP duplication.

22. The method according to claim 20 or 21, wherein the configuration information comprises duplication secondary path activation state information of at least the data of the first type in the plurality of types of data, and the duplication secondary path activation state information indicates whether to activate or deactivate a duplication secondary path of the data of the first type.

23. The method according to any one of claims 20 to 22, wherein the configuration information comprises indication information of the duplication secondary path of at least the data of the first type in the plurality of types of data and second indication information indicating whether to activate a specific duplication secondary path.

24. The method according to any one of claims 20 to 23, wherein the method further comprises:
sending a second activation indication to the terminal device, wherein the second activation indication indicates to activate the duplication secondary path of the data of the first type, or indicates to deactivate the duplication secondary path of the data of the first type.

25. The method according to any one of claims 17 to 24, wherein the PDCP entity is associated with one split radio access bearer split DRB, the configuration information further indicates a split secondary path of at least the data of the first type in the plurality of types of data, and the split secondary path is used to transmit a split data packet.

26. The method according to claim 25, wherein the configuration information comprises indication information of the split secondary path of at least the data of the first type in the plurality of types of data.

27. The method according to claim 25 or 26, wherein the configuration information comprises a split threshold of at least one type of data in the plurality of types of data, and one type of data corresponds to one split threshold; or the configuration information comprises a general split threshold of the plurality of types of data, and the plurality of types of data correspond to one general split threshold, wherein the split threshold is used to determine whether to split corresponding data.

28. The method according to any one of claims 17 to 27, wherein the plurality of types of data comprise data of an I-frame using intra-frame coding and data of a P-frame using predictive coding.

29. A communication apparatus, comprising a processor, wherein the processor is coupled to a memory; the memory stores a computer program; and the processor is configured to invoke the computer program in the memory, to enable the communication apparatus to perform the method according to any one of claims 1 to 16 or the method according to any one of claims 17 to 28.

30. A computer-readable storage medium, wherein the storage medium stores a computer program or instructions; and when the computer program or the instructions are executed by a computer, the method according to any one of claims 1 to 16 or the method according to any one of claims 17 to 28 is implemented.

31. A communication system, comprising an apparatus for performing the method according to any one of claims 1 to 16 and an apparatus for performing the method according to any one of claims 17 to 28.
